# EUROPEAN PATENT APPLICATION

(11) **EP 3 113 090 A1**
(43) Date of publication of application: **04.01.2017**
(21) Application number: 15290169.0
(22) Date of filing: 01.07.2015
(51) Int. Cl.: G06Q 10/08

(54) **BAGGAGE TRACKING SYSTEM**

(71) Applicant: Amadeus S.A.S., 06410 Biot (FR)
(72) Inventor: Krasko, Maria, 83440 Fayence (FR); Lecouturier, Etienne, Acton Lane, Chiswick W4 5EE (GB); Coxall, Matthew, Reading, Bershire RG6 3UP (GB)
(74) Representative: Samson & Partner Patentanwälte mbB

(57) **Abstract**

Systems, methods, and computer program products for tracking baggage. An electronic tag (e-tag) may be attached to or integrated with a bag, and may include a globally unique identifier (GUID). A user may access a database to link the GUID with the bag, a passenger, and an itinerary by associating selected records in the database containing data relating to the GUID, bag, passenger and itinerary. Agents for the carrier may access the data in the records by transmitting queries to the database that include the GUID. The GUID may be retrieved by reading the e-tag with a user device, such as a smart phone or dedicated scanning device. The GUID may also be used to generate lost-bag and found-bag records in the database, and for matching these records to find lost bags. The database may also contain images of the bag that is associated with the GUID.

## Description

### BACKGROUND

The invention generally relates to computers and computer software, and in particular to systems, methods, and computer program products for tracking baggage being transported by a carrier.

Passengers being transported by an airline or other type of carrier often have one or more items of baggage, or bags, that are too large or heavy for the passenger to store in the cabin of an aircraft as "carry-on" baggage, or that contain items that are not allowed into the cabin of the aircraft. Bags that cannot be carried on the aircraft must be checked-in with the carrier for storage in a cargo hold of the aircraft, at which point the carrier assumes responsibility for transporting the checked bags. Typically, as part of the check-in process, a check-in agent will affix a tag to the outside of each bag. Each tag may include a pre-assigned number that is associated with the passenger by a Departure Control System (DCS). The passenger may then be provided with one or more baggage claim checks including the numbers of the checked bags. The tag may thereby be used to identify the owner of the baggage when the baggage is claimed at the destination.

Because conventional methods of tracking checked baggage require that the passenger obtain a tag from the agent prior to boarding the aircraft, passengers checking baggage may be subjected to an additional delay before boarding the aircraft as compared to passengers who only have carry-on baggage. In addition, baggage may occasionally miss a connecting flight, be placed on the wrong aircraft, be claimed by someone other than the owner, or otherwise be misplaced. Because large carriers process millions of items of checked baggage through thousands of airports every day, even a small percentage of misplaced baggage can result in significant costs to the carrier. Lost baggage rates, and how quickly lost baggage is found, may also contribute to passenger satisfaction levels and carrier ratings. Although conventional tags help identify baggage, the assigned numbers may fail to properly identify bags that become separated from the flight on which they were originally checked. Misplaced baggage that is not identified by the carrier that checked the bag soon after the baggage has been separated from the original flight may be lost for the duration of the trip, if not permanently.

Thus, improved systems, methods, and computer program products for tracking checked baggage are needed that improve the speed and accuracy with which baggage is identified, and that do not require passengers to check baggage with an agent prior to boarding a flight.

### SUMMARY

In an embodiment of the invention, a system for tracking baggage is provided. The system includes one or more processors and a memory coupled to the processor. The memory stores data comprising a database and program code that, when executed by the one or more processors, causes the system to receive a first request to link a globally unique identifier and an item of baggage. In response to receiving the first request, the system associates, in the database, a first record that defines the globally unique identifier and a second record that defines a characteristic of the item of baggage. The program code further causes the system to receive a second request to link the globally unique identifier and a passenger. In response to receiving the second request, the system associates, in the database, the first record and a third record that defines a characteristic of the passenger.

In another embodiment of the invention, a method for tracking baggage is provided. The method includes receiving, at the database, the first request to link the globally unique identifier and the item of baggage. The method further includes, in response to receiving the first request, associating the first record that defines the globally unique identifier and the second record that defines the characteristic of the item of baggage. The method further includes receiving the second request to link the globally unique identifier and the passenger, and in response to receiving the second request, associates the first record and the third record that defines the characteristic of the passenger.

In another embodiment of the invention, a computer program product is provided that includes a non-transitory computer-readable storage medium including program code. The program code is configured, when executed by the one or more processors, to cause the one or more processors to receive the first request to link the globally unique identifier and the item of baggage. In response to receiving the first request, the system associates the first record that defines the globally unique identifier and the second record that defines the characteristic of the item of baggage. The program code further causes the system to receive the second request to link the globally unique identifier and the passenger. In response to receiving the second request, the system associates the first record and the third record that defines a characteristic of the passenger.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a baggage tracking system and a baggage tracking database in communication via a network.
FIG. 2 is a diagrammatic view of an exemplary computing system for hosting the baggage tracking system and/or baggage tracking database of FIG. 1.
FIG. 3 is a flow-chart illustrating a process that may be executed by the baggage tracking system of FIG. 1 to link a globally unique identifier with a passenger, a bag, and an itinerary, and for tracking the bag using the globally unique identifier.
FIG. 4 is a diagrammatic view of a computing system including a mobile application that may be used to access the baggage tracking system of FIG. 1.
FIG. 5 is a diagrammatic view of showing additional details of the baggage tracking system and the baggage tracking database of FIG. 1, and the mobile application of FIG. 4.
FIG. 6 is a diagrammatic view illustrating a plurality of usage scenarios of the baggage tracking system of FIG. 1.
FIG. 7 is a perspective view illustrating a bag that may be tracked by the baggage tracking system of FIG. 1.
FIG. 8 is a diagrammatic view illustrating a user interface that may be displayed by the mobile application of FIG. 4 to capture an image of the bag in FIG. 7.
FIG. 9 is a flow-chart illustrating a process that may be executed by the baggage tracking system of FIG. 1 to register a passenger, a bag, and an e-tag.
FIG. 10 is a flow-chart illustrating a process that may be executed by the baggage tracking system of FIG. 1 to locate a lost bag using the globally unique identifier.
FIG. 11 is a flow-chart illustrating another process that may be executed by the baggage tracking system of FIG. 1 to locate a lost bag using the globally unique identifier and an image of the lost bag.

### DETAILED DESCRIPTION

Embodiments of the invention may be implemented by a processing and database system. The processing and database system may comprise one or more computerized subsystems, such as a reservation system, a customer management system, a baggage reconciliation system, and a baggage tracking system. The processing and database system may also include a baggage tracking database that maintains baggage tracking data, and that may form part of the baggage tracking system.

To track an individual item of baggage, or bag, the baggage tracking system may employ electronic tags, or e-tags. Each e-tag may include a globally unique identifier (GUID) that can be linked with a particular passenger, bag, or travel itinerary by associating a record containing the GUID with one or more other records in the baggage tracking database. The GUID may be used by the system to track the bag so that the e-tag can replace or supplement conventional paper tags. E-tags may be integrated into the baggage prior to the time of sale (e.g., by the manufacturer), or attached by the passenger after the baggage has been purchased. In either case, the e-tags may be configured to be read by a user device using optical scanning, radio frequency interrogation, wireless querying, or any other suitable method of reading the e-tag.

By linking passengers, bags, and itineraries to a GUID, the baggage tracking system may simplify dropping-off or checking-in baggage prior to a flight as compared to tags lacking the GUID feature. The baggage tracking system may also improve the process of locating baggage in the event a bag is misplaced. The baggage tracking system may be configured to communicate with user devices that read the e-tag to retrieve the GUID. These user devices may include, for example, a dedicated reading device provided to employees of the carrier, a mobile device such as a smart phone, or some other type of device connected to a computer system that tracks or otherwise manages passengers or baggage.

Advantages provided by embodiments of the invention as compared to baggage tracking systems lacking GUID enabled features may include the ability to check-in baggage online. Online check-in may enable no-wait baggage drop-off at the airport or other carrier station, as the relevant records linking the baggage to the passenger and trip may already be associated in the baggage tracking database. The baggage tracking database may enable a lost- and-found process that positively identifies a found bag based on the GUID, one or more images of the bag, or a combination of the GUID and the images of the bag. In cases where the e-tag is integrated with the baggage at the time of manufacture, data describing the baggage, including images of the bag, may be provided to the baggage tracking database by the manufacturer.

The baggage tracking system may thereby reduce baggage loss, improve baggage identification, and reassure passengers that their baggage is being properly transported by enabling real-time tracking of baggage location. The baggage tracking system may further facilitate the carrier or passenger declaring a bag as lost, and keep the passenger informed about their baggage throughout the trip.

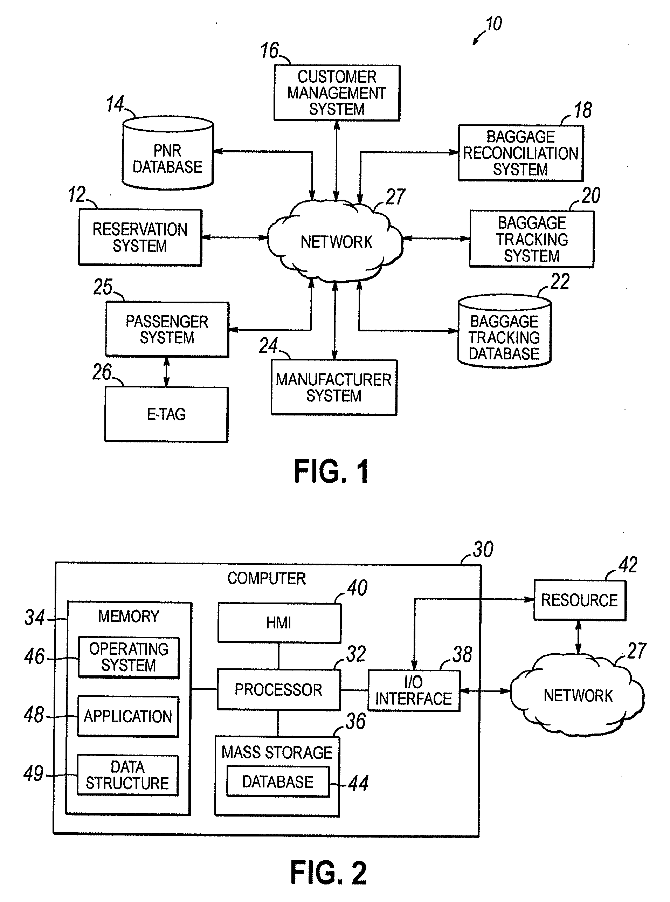

Referring now to FIG. 1, an operating environment 10 in accordance with an embodiment of the invention may include a reservation system 12, a Passenger Name Record (PNR) database 14, a customer management system 16, a baggage reconciliation system 18, a baggage tracking system 20, a baggage tracking database 22, a baggage manufacturer system 24, a passenger system 25, and an e-tag 26. Each of the reservation system 12, PNR database 14, customer management system 16, baggage reconciliation system 18, baggage tracking system 20, baggage tracking database 22, baggage manufacturer system 24, and passenger system 25 may communicate through a network 27. The network 27 may include one or more private or public networks (e.g., the Internet) that enable the exchange of data.

The reservation system 12 may manage information and conduct transactions related to inventory, pricing, reserving, and booking of travel services, such as flights. The reservation system 12 may be operated by the carrier, and may be linked to a Global Distribution System (GDS) (not shown) that provides access to multiple reservation systems. The reservation system 12 may enable authorized users to reserve, book, and pay for airline tickets. The reservation system 12 may also interact with other reservation systems and third party seller systems (not shown), either directly or through the GDS, to enable a validating carrier or third party seller to sell tickets for seats provided by the operating carrier. The operating carrier may then bill the validating carrier for the services provided. The reservation system 12 may also respond to queries received from other systems for itinerary data, such as data relating to a flight or passenger.

The PNR database 14 may be provided by the reservation system 12 or another suitable system, and may be configured to maintain PNRs for the carrier. Each PNR may be generated, at least in part, by the reservation system 12, and may comprise one or more reservation records that contain itinerary and passenger information associated with one or more booked reservations. The PNR database 14 may be accessible by other systems, such as the customer management system 16, baggage reconciliation system 18, and baggage tracking system 20, and may include records storing data defining an itinerary for a particular trip, passenger, or group of passengers. The defined itinerary may include travel services from multiple travel service providers. To facilitate locating the PNR in the PNR database, a record locator or other suitable record identifier may be associated with the PNR.

The customer management system 16 may be configured to provide departure control functions. For example, the customer management system 16 may enable a check-in agent to check-in passengers arriving at the airport. To this end, the customer management system 16 may be configured to manage seat assignments, validate tickets, issue boarding passes, track boarding, and provide regulatory checks. The customer management system 16 may also manage application of carrier baggage policies and collection of baggage fees. This management may include updating the status of passengers in the PNR database 14, and updating the status of baggage in the baggage tracking database 22. The customer management system 16 may also enable check-in agents to check records in the baggage tracking database 22. The check-in agent may thereby update relevant baggage data to reflect the correct information or changes in status provided by the baggage reconciliation system 18, such as the baggage status being marked as loaded.

The baggage reconciliation system 18 may use real-time data to track baggage simultaneously with passenger movement as passengers and baggage travel through the airport, including on and off the aircraft. The baggage reconciliation system 18 may be configured to enable check-in staff, baggage handlers, load controllers, and carriers to exchange data in real-time regarding the status of baggage. This data may include information regarding loading, tracking, location, and management of baggage, and may be accessed on demand. The baggage reconciliation system 18 may work cooperatively with the customer management system 16 to ensure that the status of the passenger is matched with their baggage so that flights do not depart unless both the passenger and their baggage are on board the aircraft.

The baggage tracking system 20 work cooperatively with other systems and databases to track baggage using the GUID. To this end, the baggage tracking system 20 may exchange data with the reservation system 12, PNR database 14, customer management system 16, and baggage reconciliation system 18, and update the status of baggage in the baggage tracking database 22 based thereon. The baggage tracking system 20 may also provide a web-based user interface accessible by passengers who wish to check on the status of their baggage online.

The baggage tracking database 22 may be provided by the baggage tracking system 20, or any other suitable system, and may store and manage data relating to passengers, bags, and itineraries. This data may include passenger data, baggage data, itinerary data, and e-tag data stored in a plurality of records managed by the baggage tracking database 22.

The baggage manufacturer system 24 may interface with the baggage tracking system 20 to register items of baggage in the baggage tracking database 22. This registration process may include transmitting data defining characteristics of the bag, such as the type, color, size, model, or any other manufacturer details of the bag that are used to populate the baggage tracking database 22.

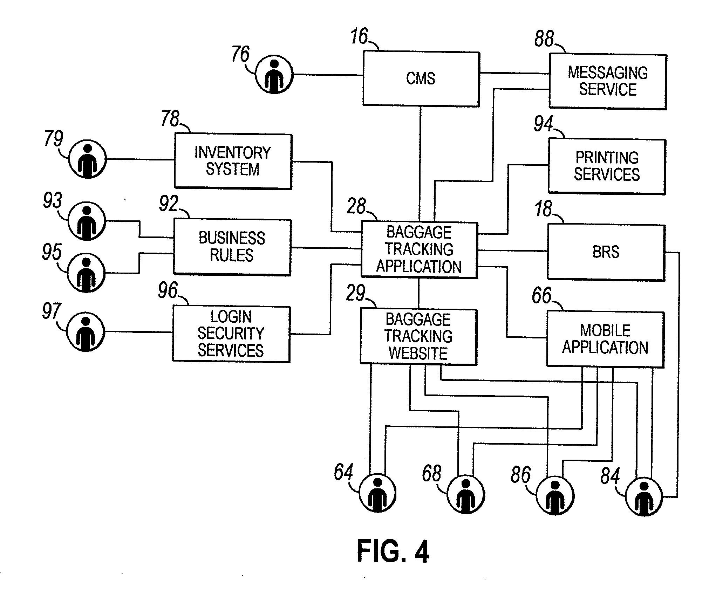

The passenger system 25 may comprise a desktop computer, laptop computer, tablet computer, smart phone, or any other suitable computing device used by the passenger to access the network 27. The passenger may use the passenger system 25 to check or update the status of a bag by accessing the baggage tracking system 20. For example, the passenger may launch a browser application, and use the browser application to check or update the status of the bag on a baggage tracking website 29 (FIG. 4). The passenger system 25 may also be configured to retrieve data from the e-tag 26, such as the GUID, by reading the e-tag 26.

The e-tag 26 may store data in the form of a machine readable code or in a memory. The machine readable code may be readable, for example, by a computer or scanning device through optical or other electromagnetic means. In the case of optical storage, the machine readable code may comprise a bar code, a QR code, or any other suitable machine readable technology capable of storing the GUID. The e-tag 26 may, in addition to or instead of the machine readable code, comprise an integrated circuit, or chip, having memory and an input coupled to a small coil which serves as an antenna. For e-tags having the aforementioned chip, the GUID may be stored in the memory of the chip. In response to activation by a suitable radio frequency (RF) signal, the e-tag 26 may act as a transponder and transmit the GUID stored in the chip to the scanning device. This type circuitry is sometimes referred to as an RFID tag.

In alternative embodiment, the e-tag 26 may include circuitry configured to communicate with external devices using a wireless communication protocol. This circuitry may include, for example, a transceiver configured to communicate with other devices by transmitting and receiving data using the wireless communication protocol. This data may be read from, or written to, the memory in the e-tag 26. Examples of suitable wireless communication protocols may include BLUETOOTH®, which is a wireless standard available from the Bluetooth Special Interest Group (SIG) of Kirkland, Washington, United States. E-tags including active circuitry (e.g., a transceiver, memory, or processor) may also include a power source, such as a battery, that provides power to the e-tag 26.

The e-tag data may include, in addition to the GUID, data identifying whether the e-tag 26 is linked to a bag or passenger, an identity of a bag, or any other suitable data. In response to registering the e-tag 26 in the baggage tracing database, a record may be created in the baggage tracking database 22 that stores the e-tag data. In an embodiment of the invention, the e-tag 26 may be configured to display at least a portion of the e-tag data, such as the LPN or trip details, in a human readable form. For example, the e-tag 26 may include a display device, such as a Liquid Crystal Display (LCD) screen, for displaying data in a user readable form. The display device feature may facilitate, for example, the passenger or employee of the carrier manually entering the LPN into a data field, such as while using the baggage tracking website 29 or mobile application 66. The e-tag 26 may be placed inside the bag or attached to the outside of the bag. For embodiments including the display device, or that need to be read by optically scanning the e-tag 26, the e-tag 26 may be attached so that it is visible on the outside of the bag.

To obtain data from the e-tag 26, the user device may include a light source, such as a laser, that illuminates the machine readable code and a photo detector that generates an electrical signal in response to light reflected from the code. The user device may, in addition to or instead of the light source and photo detector, include an image capturing device (e.g., a digital camera) that captures images representative of the surrounding environment. These captured images may be processed into any suitable digital image file format known in the art, such as a raw image file, bit map, or Joint Photographic Experts Group (JPEG) formatted image (to name but a few) by the user device. A digital image processing technique may then be used by the user device to decode any machine readable code that appears in the captured image.

For e-tags including the RFID tag, the user device may include a radio transceiver configured to transmit RF signals that activate the RFID tag, and receive RF signals from the RFID tag that are transmitted in response to said activation. The user device may also include a transceiver configured to communicate with the e-tag 26 by transmitting and receiving data using the wireless communication protocol, e.g., BLUETOOTH®.

Referring now to FIG. 2, the reservation system 12, PNR database 14, customer management system 16, baggage reconciliation system 18, baggage tracking system 20, baggage tracking database 22, baggage manufacturer system 24, and passenger system 25 of operating environment 10 may be implemented on one or more computer devices or systems, such as exemplary computer system 30. The computer system 30 may include a processor 32, a memory 34, a mass storage memory device 36, an input/output (I/O) interface 38, and a Human Machine Interface (HMI) 40. The computer system 30 may also be operatively coupled to one or more external resources 42 via the network 27 or I/O interface 38. External resources may include, but are not limited to, servers, databases, mass storage devices, peripheral devices, cloud-based network services, or any other suitable computer resource that may be used by the computer system 30.

The processor 32 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 34. Memory 34 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 36 may include data storage devices such as a hard drive, optical drive, tape drive, volatile or non-volatile solid state device, or any other device capable of storing information.

The processor 32 may operate under the control of an operating system 46 that resides in memory 34. The operating system 46 may manage computer resources so that computer program code embodied as one or more computer software applications, such as an application 48 residing in memory 34, may have instructions executed by the processor 32. In an alternative embodiment, the processor 32 may execute the application 48 directly, in which case the operating system 46 may be omitted. One or more data structures 49 may also reside in memory 34, and may be used by the processor 32, operating system 46, or application 48 to store or manipulate data.

The I/O interface 38 may provide a machine interface that operatively couples the processor 32 to other devices and systems, such as the network 27 or external resource 42. The application 48 may thereby work cooperatively with the network 27 or external resource 42 by communicating via the I/O interface 38 to provide the various features, functions, applications, processes, or modules comprising embodiments of the invention. The application 48 may also have program code that is executed by one or more external resources 42, or otherwise rely on functions or signals provided by other system or network components external to the computer system 30. Indeed, given the nearly endless hardware and software configurations possible, persons having ordinary skill in the art will understand that embodiments of the invention may include applications that are located externally to the computer system 30, distributed among multiple computers or other external resources 42, or provided by computing resources (hardware and software) that are provided as a service over the network 27, such as a cloud computing service.

The HMI 40 may be operatively coupled to the processor 32 of computer system 30 in a known manner to allow a user to interact directly with the computer system 30. The HMI 40 may include video or alphanumeric displays, a touch screen, a speaker, and any other suitable audio and visual indicators capable of providing data to the user. The HMI 40 may also include input devices and controls such as an alphanumeric keyboard, a pointing device, keypads, pushbuttons, control knobs, microphones, etc., capable of accepting commands or input from the user and transmitting the entered input to the processor 32.

A database 44 may reside on the mass storage memory device 36, and may be used to collect and organize data used by the various systems and modules described herein. The database 44 may include data and supporting data structures that store and organize the data. In particular, the database 44 may be arranged with any database organization or structure including, but not limited to, a relational database, a hierarchical database, a network database, an object-oriented database, or combinations thereof. A database management system in the form of a computer software application executing as instructions on the processor 32 may be used to access the information or data stored in records of the database 44 in response to a query, where a query may be dynamically determined and executed by the operating system 46, other applications 48, or one or more modules. Although embodiments of the invention may be described herein using relational, hierarchical, network, object-oriented, or other database terminology in specific instances, persons having ordinary skill in the art will understand that embodiments of the invention may use any suitable database management model, and are not limited to any particular type of database.

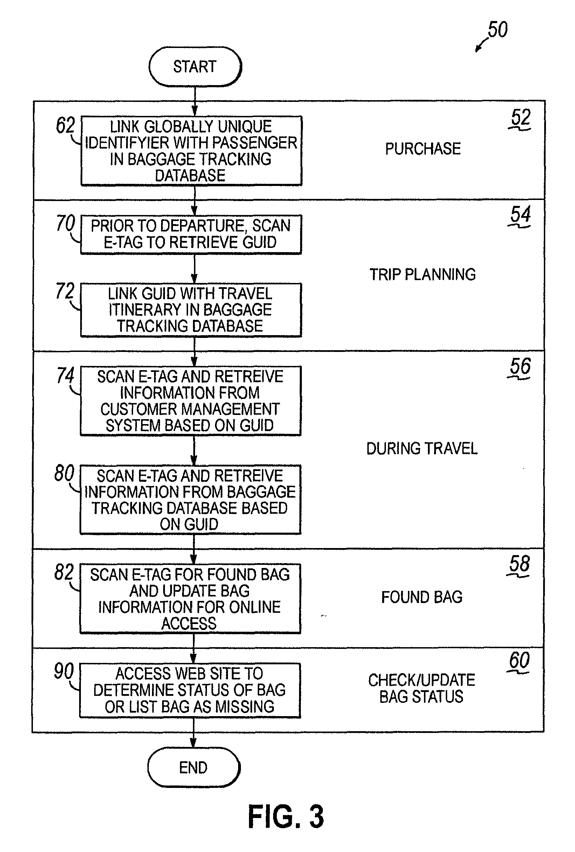

Referring now to FIGS. 3-5, FIG. 3 presents a flow-chart depicting a process 50 that may be executed by the baggage tracking system 20 during a plurality of phases or events relating to a trip. The phases or events illustrated include a purchase phase 52, a trip planning phase 54, a travel phase 56, a found bag event 58, and a check/update status event 60.

FIG. 4 depicts systems and actors involved in the operation of the baggage tracking system 20 in accordance with the process 50. These systems and actors may include a baggage tracking application 28 that provides one or more functions of the baggage tracking system 20, such as managing the baggage tracking database 22, and a mobile application 66 that provides access to the baggage tracking system 20.

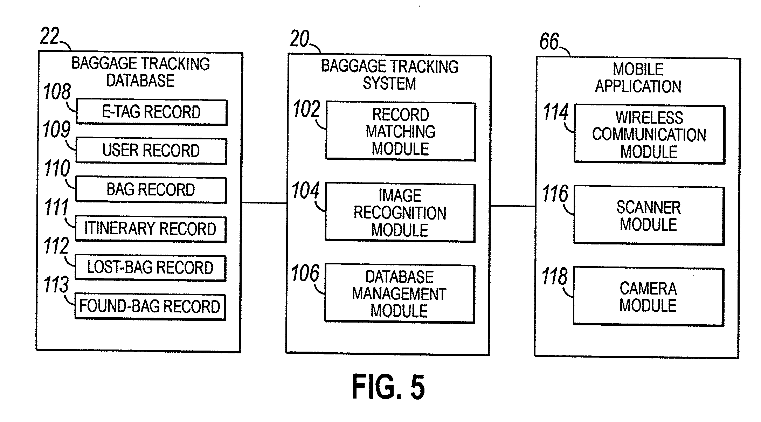

FIG. 5 depicts additional details of the baggage tracking system 20, baggage tracking database 22, and mobile application 66. The baggage tracking system 20 may include a record matching module 102, an image recognition module 104, and a database management module 106. These modules may enable the baggage tracking system 20 to store and manage data received from the mobile application 66, and match received images or GUIDs to baggage and passengers 64 registered in the baggage tracking database 22. The baggage tracking database 22 may include one or more e-tag records 108, user records 109, bag records 110, itinerary records 111, lost-bag records 112, and found-bag records 113. Records may be associated with each other or with other data in or external to the database by defining a relationship between the records. These relationships may be defined or realized using a table, by storing data defining the relationship in one or more of the records being associated, by storing the data in the record, or by any other suitable means.

In block 62 and during the purchase phase 52, a passenger 64 may purchase a bag having an integrated e-tag 26, or a separate e-tag 26 for attachment to a bag. During or subsequent to this purchase, the GUID provided by the e-tag 26 may be linked to the passenger 64. This linking may comprise creating or identifying an e-tag record 108 and a user record 109 in the baggage tracking database 22. The GUID may then be stored in the e-tag record 108, and data identifying the passenger 64, such as the passenger's name, address, or an account number, stored in the user record 109. The e-tag record 108 and user record 109 may be associated in the baggage tracking database 22, thereby linking the GUID and the passenger 64. The bag may also be linked with the GUID by creating a bag record 110 and associating the e-tag record 108 and the bag record 110 in the baggage tracking database 22. Data relating to the bag, such as data defining a characteristic of the bag, may be stored in the bag record 110.

The user record 109 may store passenger data in one or more fields using one or more of a plurality of data structures, such as strings, numbers, or Boolean flags. For example, a plurality of data structures (e.g., three data strings) may be allocated for the passenger name, such as one string for each of the first, middle, and last name of the passenger. Likewise, the address may be stored in separate data strings for each line in a plurality of lines comprising the address of the passenger.

Data defining the characteristics of the bag may be uploaded to the baggage tracking database 22 by the baggage manufacturer system 24, the passenger system 25, or any other suitable system. In cases where a bag is being registered in the baggage tracking system without the GUID, the person registering the bag may photograph the bag and provide one or more images. These images may then be stored in or otherwise associated with the bag record 110. In some cases, the images may be collected by following a pre-defined set of rules defining the type of images that should be provided.

Each bag record 110 may include fields configured to store data defining the owner of the bag, the name, color, make, model, and dimensions or shape of the bag, whether the bag record 110 is associated with an e-tag record 108, user record 109, or itinerary record 111, and data identifying one or more images of the bag. Images may include stock images provided by the manufacturer, or images of the actual bag taken by the passenger 64 or other user of the bag.

In cases where the passenger 64 registers the bag in the baggage tracking system 20, the passenger 64 may access the baggage tracking system 20 using the baggage tracking website 29 or a mobile application 66. The mobile application 66 may be downloaded, for example, into the passenger system 25 from the baggage tracking website 29 by the passenger 64. The baggage tracking website 29 may be provided by the baggage tracking system 20, or any other suitable system, and may enable the passenger 64 to access to the baggage tracking system 20 over the internet via a web-browser. Once the passenger 64 has access to the baggage tracking system 20, the passenger 64 may interact with the baggage tracking system 20 to register the bag.

In an embodiment of the invention, data relating to the bag may be uploaded to the baggage tracking database 22 by a manufacturer 68 at the time of purchase using one of the baggage tracking website 29 or mobile application 66. In cases where the e-tag 26 is integrated with the bag, baggage data may be preloaded into the baggage tracking database 22 prior to purchase, and linked to the passenger 64 using the GUID at a later time. In embodiments where the e-tag 26 is being purchased for attachment to a pre-existing bag, or where the data defining characteristics of the bag are not provided by the manufacturer 68, the passenger 64 may enter or otherwise upload data describing characteristics of the bag to the baggage tracking system 20 using the baggage tracking website 29 or mobile application 66.

In block 70 and during the trip planning phase 54, the e-tag 26 may be read to retrieve the GUID. This reading may be performed, for example, by capturing an image of the QR code provided by the e-tag 26 with the passenger system 25. This may comprise taking a picture of the e-tag 26 with a smart phone, and extracting the GUID from the image of the QR code. The e-tag 26 may also be read by interrogating the RFID tag or querying the e-tag 26 using the wireless communication protocol, as the case may be. In response to receiving the GUID, the user device may transmit the GUID to the baggage tracking system 20 using the baggage tracking website 29 or mobile application 66.

In block 72, the baggage tracking system 20 may link the GUID with an itinerary by storing the GUID in the e-tag record 108 and associating the e-tag record 108 and the itinerary record 111 in the baggage tracking database 22. In an embodiment of the invention, the GUID may be linked with the trip in response to the passenger 64 accessing the baggage tracking website 29 or mobile application 66 and identifying a flight on which the passenger 64 intends to check the bag. The link may be created in the baggage tracking database 22, for example, by associating the record locator of the PNR for the trip in question with the e-tag record 108.

Once the e-tag record 108 and the record locator have been associated in the baggage tracking database 22, the baggage tracking system 20 may use the GUID to identify the PNR for the trip on which the bag is being used. The baggage tracking system 20 may thereby obtain information relating to the trip from the PNR database 14 based on the GUID for answering queries launched in response to reading the e-tag 26. The GUID may also be provided to the PNR database 14 and associated with the PNR so that the PNR defining the itinerary for the trip linked to the GUID can be identified in the PNR database 14 using the GUID.

In block 74 and during the travel phase 56, an agent of the carrier or airport may scan the e-tag 26 by causing the user device to read the e-tag 26 in association with handling a bag. For example, a check-in agent 76 may accept the bag at a check-in counter. To verify that the baggage data in the baggage tracking database 22 matches the bag being checked, and that the bag was correctly registered, the check-in agent 76 may read the e-tag 26 of the bag using a user device.

In response to reading the e-tag 26, the user device may transmit the GUID to the customer management system 16, which may in turn communicate with the baggage tracking system 20 to identify the travel itinerary based on the GUID. The baggage tracking system 20 may identify the record locator based on the GUID, and notify the customer management system 16 of the flights on which the bag is registered. The customer management system 16 may then determine a flight number or aircraft that the bag should be on based on the travel itinerary. The flight data may be obtained from an inventory system 78 and displayed by the customer management system 16 on a terminal at the baggage check. The inventory system 78 may be managed by a flight management administrator 79. The customer management system 16 may thereby enable the check-in agent 76 to verify that the bag is correctly registered.

In block 80, the baggage tracking system 20 may retrieve data relating to the bag, such as the characteristics of the bag, prior locations of the bag, or the identity of the passenger using the bag from the baggage tracking database 22. This data may also be retrieved based on the GUID retrieved from the e-tag 26, displayed to the check-in agent 76 by the customer management system 16, and used to verify that the bag in question is the correct bag.

Block 82 may represent a found bag event 58 in which a misplaced bag is found by a loading agent 84, lost-and-found agent 86, or other agent of the carrier or airport. For example, in response to finding an unidentified bag (e.g., a bag that is not accounted for in the baggage reconciliation system 18), the loading agent 84 may declare a found bag in the baggage tracking system 20. The found bag event 58 may also result from a bag being scanned in a location that is not in accordance with the travel itinerary linked to the e-tag 26. This may occur, for example, if a misplaced bag is scanned before the bag has been reported as lost. In response to the loading agent 84 declaring the found bag, the baggage tracking system 20 may create a found-bag record 113 in the baggage tracking database 22. The found-bag record 113 may, for example, store information relating to the storage location of the bag and time or date when the bag was found.

In response to an agent declaring a found bag, the baggage tracking system 20 may prompt the agent to enter the GUID. If the bag has an e-tag 26, the agent may scan the e-tag 26 to retrieve the GUID. The GUID may then be transmitted to the baggage tracking system 20 by the baggage reconciliation system 18, baggage tracking website 29, or mobile application 66, depending on which system the user device used to read the e-tag 26 is in communication with. The GUID may be transmitted as part of a query that includes data identifying the location of the bag, and may be added to the found-bag record 113. In response to receiving the GUID, the baggage tracking system 20 may retrieve data relating to the bag from the baggage tracking database 22. The baggage tracking system 20 may then transmit this data to one or more of the customer management system 16, baggage reconciliation system 18, baggage tracking website 29, or mobile application 66 for display to the agent who scanned the e-tag 26.

If the GUID does not exist or is unknown, the agent may be prompted to enter the bag size, color, shape, type, make, model, weight, dimensions, markings, pictures, or any other suitable data that could be used to identify the bag. The entered data may be stored in corresponding fields of the found-bag record 113. The baggage tracking system 20 may then search lost-bag records 112 stored in the baggage tracking database 22 for a lost-bag record 112 that matches the found-bag record 113. If no match is found among the lost-bag records 112, the baggage tracking system 20 may search bag records 110. The bag records 110 searched may be selected based on their association with an itinerary record 111 having at least one flight in common with the itinerary record 111 associated with the lost-bag record 112. The baggage tracking system 20 may also generate a lost-bag report for processing by the lost-and-found agent 86.

In response to receiving the GUID, the baggage tracking system 20 may update the status and location of the bag in the baggage tracking database 22. If the bag has been flagged as lost in the baggage tracking database 22, the loading agent 84 or lost-and-found agent 86 may update this status to "found" in response to determining that the bag has been found. In an alternative embodiment, the baggage tracking system 20 may update the status to "found" automatically in response to receiving location data for the bag in question in a query from a user device. This change in status may trigger a messaging service 88 to send a message, such as a text message or e-mail, to the passenger system 25 indicating that the lost bag has been located.

Block 90 may represent a check/update status event 60 in which the passenger 64, or other authorized person, accesses the baggage tracking website 29 or mobile application 66. By way of example, one type of check/update status event 60 may be reception of a status update query at the baggage tracking system 20. The passenger 64 may request a status update at any time for any reason, such as to allay concerns that the bag was not loaded onto the aircraft, or in response to the bag failing to appear when expected. For example, the passenger 64 may check the status of the bag in response to the bag failing to appear in the baggage claim area at the final destination.

In cases where the bag is not present when expected, the passenger 64 may access the baggage tracking system 20 to indicate the bag is lost. In response to the passenger 64 indicating the bag is lost, the baggage tracking system 20 may generate a pre-populated lost baggage form using data stored in the PNR database 14 and/or baggage tracking database 22. The baggage tracking system 20 may also alert the lost-and-found agent 86 that the bag has been declared missing by the passenger 64.

The form may be delivered directly to the passenger 64 that notified the baggage tracking system 20 that the bag is missing. This delivery may be in electronic form to the passenger system 25 for display to the passenger 64. In other cases, a printing services system 94 at the destination airport may generate paper forms for delivery to the passenger 64. The pre-populated form may also be delivered to the carrier responsible for the bag. In an embodiment of the invention, delivery may occur after the passenger 64 has completed a "next steps" section of the lost baggage form. By way of example, the baggage tracking system 20 may pre-populate the following fields in the lost baggage form: baggage size, color, type, make, model, weight, images, markings, or any other suitable data field.

Based on data in the lost baggage form, the lost-and-found agent 86 may cause the baggage tracking system 20 to create a lost-bag record 112 in the baggage tracking database 22. The lost-and-found agent 86 may also search the baggage tracking database 22 for information about the bag, such as the last known location of the bag. The lost-and-found agent 86 may then inform the passenger 64, either directly or through the baggage tracking system 20, of the bag status and steps being taken to recover the bag. The baggage tracking system 20 may thereby reduce the amount of effort required by the passenger 64 to report a bag as missing, and the amount of time it takes to recover the bag.

Business rules 92 may define tracing protocols for determining a location where the baggage was last scanned by reading the e-tag 26, and may be defined by the carrier 93 or system supplier 95. For example, the business rules 92 may be configured to cause the baggage tracking system 20 to capture location data for the following events: establishment of a link between the e-tag 26 and the passenger 64, establishment of a link between the e-tag 26 and travel itinerary, baggage check-in, and each time a system belonging to the carrier or an airport scans the e-tag 26. Scan or connection events saved to the baggage tracking database 22 may include scans by a baggage handling system, the baggage reconciliation system 18, security systems, at tracking points, at baggage scanning systems of the destination airport, and online baggage tracking scans of the baggage. To this end, the baggage tracking application 28 may be in communication with a login security services system 96 managed by a carrier login security system administrator 97.

The baggage tracking system 20 may allow the passenger 64 and carrier agents to track the bag during the trip. Each time the GUID is read from the e-tag 26 by scanning the QR code, interrogating the RFID circuit, using the wireless communication protocol, or any other suitable means, location information identifying the location of the scan may be sent to the baggage tracking system 20 for storage in the baggage tracking database 22. In an embodiment of the invention, this location data may be used to generate a map showing the last known location of each bag being transported by the carrier.

In an embodiment of the invention, the messaging service 88 may transmit a text message to the passenger 64 at predetermined or user selectable times. For example, the passenger 64 may be notified when the bag is loaded into an aircraft corresponding to a flight number identified by the travel itinerary. This notification may occur for each connecting flight. The passenger 64 may also be notified of the location of the bag when the bag is unloaded from the aircraft and ready for distribution at the final destination. Another event that may trigger a notification to the passenger 64 is if the bag is misrouted or lost. This message may notify the passenger 64 to go to a baggage office, for example. The passenger 64 may also track the progress of an effort to locate a lost bag by accessing the baggage tracking system 20 online as described above.

To match a found bag to a lost bag, the record matching module 102 may be configured to compare one or more lost-bag records 112 with the found-bag record 113, or compare a received image of the found bag to images associated with the lost-bag records 112. The record matching module 102 may also schedule matching runs that compare the received images to the images in the baggage tracking database 22.

The image recognition module 104 may compare images received from the mobile application 66, such as images of an unidentified bag found by an agent, and images of bags in the baggage tracking database 22. To reduce the number of images compared, the image recognition module 104 may use image capture criteria and baggage data to select images stored in the baggage tracking database 22 for comparison to the received images. For example, an image of the front of a bag may only be compared to images in the baggage tracking database 22 characterized as a front view. Similarly, an image of a red garment bag may only be compared to other red garment bags in order to reduce the total number of comparisons. That is, when searching for the garment bag, the image recognition module 104 may filter out images of baggage in the baggage tracking database 22 classified as suitcases, tote bags, and duffle bags. The image recognition module 104 may also filter out images of baggage having colors other than red. The image recognition module 104 may thereby improve the performance of the baggage tracking system 20 by reducing the number of image comparisons necessary to identify the found bag.

The database management module 106 may be used by the baggage tracking system 20 to add, edit, and delete passenger data, e-tag data, baggage data, or any other data from the baggage tracking database 22. The database management module 106 may also be used to create, edit, or delete associations between records in the baggage tracking database 22. These associations may include associations between e-tag records 108 and user records 109, e-tag records 108 and bag records 110, e-tag records 108 and itinerary records 111, or any other suitable associations between records. The database management module 106 may also enable the baggage tracking system 20 to store data received from the mobile application 66 in the baggage tracking database 22. The database management module 106 may maintain a history of data stored in the baggage tracking database 22, such as a record of changes showing times changes were made.

The mobile application 66 may include a wireless communication module 114, a scanner module 116, and a camera module 118. The wireless communication module 114 may enable communication between the mobile application 66 and other devices using the wireless communication protocol for exchanging data, such as BLUETOOTH®. In embodiments of the invention using BLUETOOTH®, data encryption in accordance with the BLUETOOTH® standard may be used to protect data exchanged between the e-tag 26 and the mobile application 66.

In an embodiment of the invention, the wireless communication module 114 may enable the mobile application 66 to read e-tags having RFID circuitry by transmitting RF signals to, and receiving RF signals from, the RFID circuitry. The scanner module 116 may be configured to optically scan machine readable codes, such as bar-codes and QR-codes. To this end, the scanner module 116 may scan images captured by the camera module 118 for machine readable codes. In addition to capturing images that contain optical machine readable codes for use by the scanner module 116, the camera module 118 may also capture images of baggage for uploading to the baggage tracking database 22.

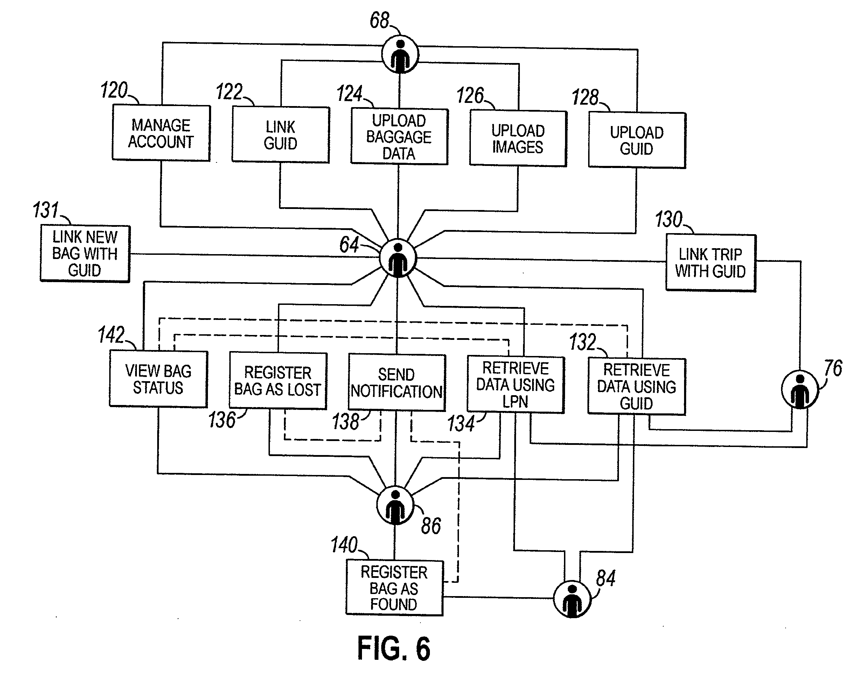

Referring now to FIG. 6, a diagram depicting exemplary usage scenarios and the corresponding actors for embodiments of the invention is presented. The actors depicted include the passenger 64, manufacturer 68, check-in agent 76, loading agent 84, and lost-and-found agent 86. These agents may be those who have the most direct influence on and contact with the baggage tracking system 20. The passenger 64, manufacturer 68, and lost-and-found agent 86 may interact with the baggage tracking system 20 primarily through the baggage tracking website 29 or the mobile application 66. The check-in agent 76 may interact with the baggage tracking system 20 primarily through the customer management system 16. The loading agent 84 may interact with the baggage tracking system 20 through flight management applications, baggage scanning devices, the baggage tracking website 29, and the mobile application 66.

With reference to usage scenario 120, account management may include activities relating to the creation, updating, or removal of a user account in the baggage tracking system 20. In an exemplary scenario, the passenger 64 or manufacturer 68 may create the user account, such as at the time the e-tag 26 or bag is purchased. The passenger 64 may access, update, or otherwise manage the user account during the life of the account. The manufacturer 68 may store, update, or otherwise maintain data relating to the model of the bag in the manufacturer system 24. This data may, for example, characterize a bag purchased by the passenger 64 and be downloaded into the user account by either the passenger 64 or the manufacturer 68.

Examples of account management activities may include updating the account, removing the account, creating a group or a family account (e.g., for shared baggage), receiving a notification when someone adds the passenger 64 to the group or family account, sending a confirmation in response to receiving the notification that the passenger 64 was added to the group or family account, modifying an account from the group or family account by the passenger 64, removing an account from the group or family account, receiving a notification that someone from the group or family account has attempted to modify the account of the passenger 64, sending a confirmation in response to someone from the group or family account modifying the account of the passenger 64, receiving a notification that someone from the group or family account has tried to remove the account of the passenger 64, or sending a confirmation that someone from the group or family account has tried to remove the account of the passenger 64.

With reference to usage scenario 122, linking the GUID may occur when the e-tag 26 or bag having the integrated e-tag 26 is purchased. The process of linking the GUID may include retrieving the GUID from the e-tag 26 by reading the e-tag 26 using the mobile application 66. The GUID may be registered to the passenger 64 by associating the GUID with the user account of the passenger 64 in the baggage tracking database 22. Examples of mobile application 66 activities that relate to linking the GUID with the passenger 64 may include retrieving the GUID from the e-tag 26. This function may be enabled for reading all GUIDs from all e-tags, or may be configured to only read GUIDs from e-tags associated with the passenger account.

With reference to usage scenarios 124 and 126, uploading baggage data and images may occur, for example, at the time a bag is purchased, or any time subsequent to purchase. Uploading baggage data and images may include transmitting data characterizing the bag or images of the bag to the baggage tracking system 20 by the manufacturer 68. Uploading images may include the passenger 64 or other mobile application user taking a picture of the bag and uploading the picture to the baggage tracking system 20 using the mobile application 66.

Uploading baggage data may be accomplished by reading the e-tag 26 to retrieve the GUID. Whether the mobile application 66 uses the wireless communication protocol to request data from the e-tag 26, interrogates RFID circuitry, or performs an optical scan of the machine readable code may depend on how the e-tag 26 is configured. Once the GUID has been retrieved, the mobile application 66 may transmit the GUID and the data being uploaded to the baggage tracking system 20. The baggage tracking system 20 may then link the bag with the GUID by associating the appropriate records in the baggage tracking database 22.

Uploading images may be accomplished by the passenger 64 capturing an image of the bag using the mobile application 66, or the manufacturer 68 uploading stock images from the baggage manufacturer system 24. The manufacturer 68 may also upload data characterizing the bag from the baggage manufacturer system 24. The bag in question may thereby be registered in the baggage tracking system 20 with data characterizing the baggage pre-filled by the manufacturer. Manufacturer supplied data may include the identity of the manufacturer 68, model, size, color, weight, and images of the bag, or any other suitable data. Baggage may also be registered by manually entering the above data. The mobile application 66 may also allow the passenger 64 to associate baggage with pictures taken manually, modify baggage items registered in the baggage tracking system 20 (with or without images), and delete bags, such as a bag that is no longer in use.

With reference to usage scenario 128, passengers 64 and manufacturers 68 may also upload the GUID independently of any baggage data. Passengers 64 and manufacturers 68 may thereby register an e-tag 26 or remove an excising e-tag 26 from the baggage tracking system 20 independently of adding, changing, or deleting baggage data.

With reference to usage scenario 130, prior to departure, the passenger 64 or the check-in agent 76 may link the trip with the GUID. In cases where the bag is not already linked with the e-tag 26 (e.g., the bag did not come from the manufacture with an integrated e-tag 26), the bag smay be linked with the e-tag 26 before linking the GUID to the trip. Once the bag is linked to the e-tag 26 (e.g., the e-tag record 108 and the bag-record 110 are associated in the baggage tracking database 22), the trip may be linked with the GUID by defining associating the e-tag record 108 and the itinerary record 111 in the baggage tracking database 22. This link between the trip and the GUID and may be defined, for example, in response to the passenger 64 checking in online or via a kiosk. In either case, the passenger 64 may enter the GUID manually, or the GUID may be retrieved by the mobile application 66 or kiosk reading the e-tag 26.

With reference to usage scenario 131, the GUID retrieved by reading the e-tag 26 may be linked with different bags at different times, e.g., on separate non-overlapping trips. That is, a single e-tag 26 may be linked with different bags or different trips by associating the e-tag record 108 with different bag records 110 or different itinerary records 111 in the baggage tracking database 22. Because the e-tag 26 can only be used with one bag at a time, the corresponding GUID should not be actively linked with more than one bag at a time. Similarly, the e-tag 26 may only be used for one trip at a time, so the GUID should not be actively linked with more than one overlapping trip at a time. To this end, the business rules 92 may be configured to prevent establishment of conflicting links.

If the GUID has not been linked to the trip previously, the check-in agent 76 may retrieve the GUID from the e-tag 26 and link the GUID to the trip at the time the bag is accepted at the check-in counter. The customer management system 16 may display GUID next to a License Plate Number (LPN) so that the check-in agent 76 can verify that a tag having the correct LPN is attached to the bag being checked. The LPN may be numeric code that is printed on a paper tag attached to the bag by the check-in agent 76 at check-in. For embodiments of the e-tag 26 with the capability to receive and store new data, the LPN may also be transmitted to stored in the e-tag 26, e.g., using the wireless communication protocol or RFID interrogation. The e-tag 26 may thereby be configured to receive and store an updated LPN at check-in for later retrieval or display.

As defined by International Air Transport Association (IATA), the LPN is a 10 digit number, although it is contemplated that LPNs having other numbers of alphanumeric digits could be used. The GUID may comprise a string of alphanumeric characters of sufficient length so that no two GUIDs are identical. In an exemplary embodiment of the invention, the GUID may comprise a 32 character alphanumeric tag, e.g., 110F7600-B37E-11G4-3498-465123549099. The baggage tracking system 20 may associate the LPN and the GUID in the baggage tracking database 22 so that either number may be used to retrieve data relating to the passenger 64, checked baggage, or the itinerary.

If the baggage tracking system 20 determines that the GUID has been linked to multiple bags or overlapping travel itineraries, the baggage tracking system 20 may notify the passenger 64 or check-in agent 76 that the GUID is already associated with another bag, another trip, or both. While attempting to link the GUID with the bag or travel itinerary, the passenger 64 or check-in agent 76 may also be notified if there is an open lost-bag record 112 associated with the GUID. To facilitate re-use of the e-tag 26, the GUID may be unlinked from the bag and the travel itinerary upon completion of the trip. In the case of an open lost-bag record 112 at the completion of the trip, the GUID may remain linked with the bag until the lost-bag record 112 is closed. Unlinking of the GUID from a leg of the itinerary may occur automatically after a certain period of time, such as 24 hours after the actual arrival of the passenger 64.

With reference to usage scenario 132, the passenger 64, check-in agent 76, loading agent 84, or lost-and-found agent 86 may scan the e-tag 26 to retrieve baggage data using the GUID. Data relating to the bag in question may be retrieved, for example, by reading the e-tag 26 and transmitting the retrieved GUID to the baggage tracking system 20 using the mobile application 66. This process may be used to retrieve passenger data, baggage data, itinerary data, or any combination of passenger, baggage, and itinerary data. If no database records are associated with the GUID, the passenger 64, check-in agent 76, or loading agent 84 may be notified that no records were found.

With reference to usage scenario 134, if the bag does not have an e-tag 26, the e-tag 26 has been separated from the bag, the e-tag 26 is unresponsive to reading, or the e-tag 26 only returns the LPN, the passenger 64, check-in agent 76, loading agent 84, or lost-and-found agent 86 may retrieve passenger, baggage, or itinerary data using the LPN. The GUID may be associated with the LPN in the baggage tracking database 22 at check-in, e.g., in response to the LPN being assigned to the bag. In response to receiving a query including the LPN, the baggage tracking system 20 may retrieve the GUID based on the LPN, and use the GUID to retrieve passenger data, baggage data, itinerary data, or a combination thereof depending on the nature of the query. This data may then be returned to the requesting passenger 64, check-in agent 76, or loading agent 84. If no database records are associated with the LPN or GUID, the passenger 64, check-in agent 76, or loading agent 84 may be notified that no records were found.

With reference to usage scenario 136, in cases where the bag does not appear at the destination, the passenger 64 or lost-and-found agent 86 may go online to register the bag as lost. The passenger 64 or lost-and-found agent 86 may use the GUID to retrieve baggage and travel itinerary data, and to declare the missing bag as lost.

With reference to usage scenario 138, in an embodiment of the invention, a notification may be sent to the passenger 64 informing them that they have a limited amount of time to declare the bag as lost, e.g., 24 hours after their arrival at the destination. The baggage tracking system 20 may pre-fill a lost bag declaration form with certain data in response to the passenger 64 declaring the bag as lost. The data pre-filled into the form may include baggage data, passenger data, itinerary data, and data relating to the location and time the declaration was made. The lost bag declaration form may also provide data fields that allow the passenger 64 to add local contact data. Examples of local contact data may include an address of a hotel where the passenger 64 is staying, a local telephone number, or an alternate e-mail, e.g., the concierge at the hotel. The passenger 64 may also specify a duration for which the local contact data will be valid, and add data regarding contents of the lost bag.

In response to declaring the bag missing, the passenger 64 may be provided with access to a lost bag recovery process, including data regarding possible compensation and/or instructions on how to proceed. This data may be dependent on the airport or carrier involved. The passenger 64 may confirm the bag registered as lost, obtain a reference code for the lost bag, receive instructions where to go to communicate with the carrier in the airport, receive notification when the bag is declared as lost by the carrier, and receive a description of the next steps the carrier will take to locate the bag.

With reference to usage scenario 140, in response to finding a bag that has been reported as lost, the loading agent 84 or lost-and-found agent 86 may change the status of the bag to found. In response to the status of the bag changing from lost to found, the lost-bag record 112 may be closed. In an embodiment of the invention, the lost-bag record 112 may also be closed at any time by the passenger 64, but may require the passenger 64 provide a reason for closing the lost-bag record 112. For example, the passenger 64 may close the lost-bag record 112 after discovering that their bag is on the baggage carousel after they have reported it missing by providing the reason "bag found".

In response to the lost-bag record 112 being closed, a notification may be sent to the passenger 64 or the lost-and-found agent 86. The lost-bag record 112 may be closed, for example, in response to the bag being found, or in response to the passenger 64 receiving compensation for the lost bag. If the lost-bag record 112 is closed due to the loading agent 84 or lost-and-found agent 86 reporting the bag as found, the notification to the passenger 64 may indicate that the bag has been found and provide instructions on how to collect the bag.

In response to the passenger 64 declaring the bag as lost, the baggage tracking system 20 may send a notification to the lost-and-found agent 86. This notification may include a reference code for the lost-bag record 112 so that the lost-and-found agent 86 may retrieve the lost-bag record 112 using the reference code. The lost-bag record 112 may include the GUID linked with the bag, which may be displayed by the user device. The lost-and-found agent 86 may select the GUID to perform a search of found-bag records 113 in the baggage tracking database 22 that are associated with the GUID.

When the loading agent 84 or lost-and-found agent 86 finds the missing bag, the agent finding the bag may report the bag as being found using the baggage tracking website 29 or mobile application 66. Reporting may occur in response to reading the e-tag 26 of the found bag based on the status of the bag being "lost". That is, in response to an e-tag 26 having a GUID linked to a bag flagged as lost being read, the baggage tracking database 22 may update the status of the bag to "found".

User devices may be able to read an e-tag 26 any time the user scans the e-tag 26 when searching for a lost bag. In the lost-and-found mode, when the user device retrieves the GUID from the e-tag 26, the user device may query the baggage tracking system 20 for the lost-bag record 112. In response to receiving the GUID, the baggage tracking system 20 may search for a lost-bag record linked to the GUID. If a lost-bag record is found, the baggage tracking system 20 may transmit data to the user device indicating that the bag has been declared lost. If a lost-bag record 112 is not found, the agent may be notified that no records were found, which may indicate that the bag has not been declared lost.

If the search fails to find a lost-bag record 112 in the baggage tracking database 22, the baggage tracking system 20 may retrieve the passenger, baggage, and itinerary data associated with the GUID, and transmit this data to an appropriate user device for display to the agent. The baggage tracking system 20 may also create a new lost-bag record 112 using passenger, baggage, and itinerary data so that the lost bag may be recorded as found and steps taken to reunite the bag with the passenger 64. The agent may also enter additional data relating to the bag, such as the date, time, airport, current location of the bag, name of the agent, the location the bag is being taken to for pick-up, and the next steps taken to reunite the bag with the passenger 64, e.g., bag was loaded onto next available flight, etc.

With reference to usage scenario 142, any time after the trip is linked with GUID, the passenger 64 or lost-and-found agent 86 may view the status of the bag. The status may include one or more of the current status of the bag (e.g., loaded, unloaded) and a location of the bag (e.g., identity of the airport in which the bag was last scanned).

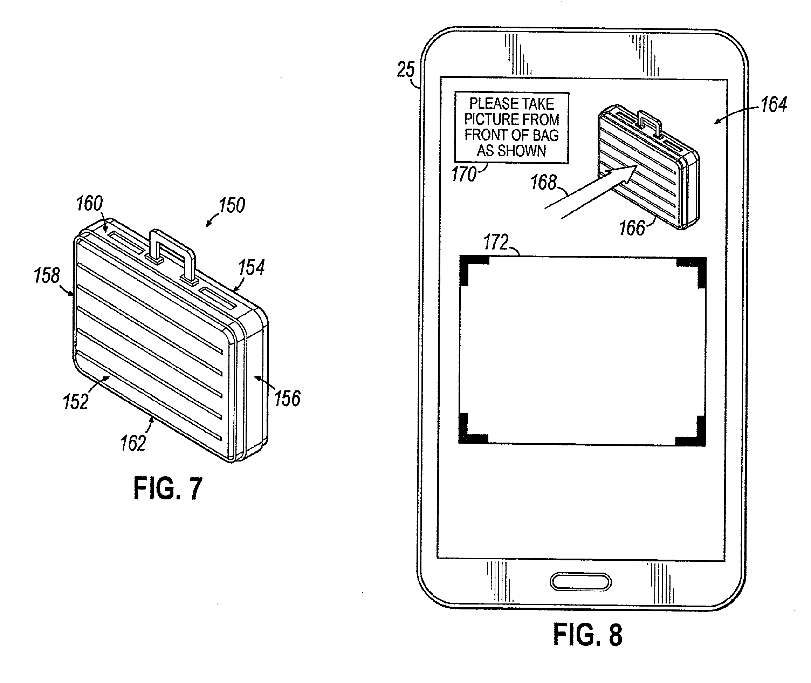

Referring now to FIG. 7, in an embodiment of the invention, the passenger, an agent of the carrier, the manufacturer, or any other suitable party may upload images of a bag 150 to the baggage tracking database 22. These images may include, for example, one or more (e.g., six) profile shots that provide one or more of a front view 152, a back view 154, a right side view 156, a left side view 158, a top side view 160, and a bottom side view 162. Optionally, the baggage tracking system 20, baggage tracking website 29, or mobile application 66 may prompt the user to capture and upload certain images. In cases where the manufacturer 68 uploads images of the bag, the passenger 64 may add one or more additional photos, such as the front view 152 and the back view 154, to show any marks, stickers, or other visual characteristics that may be unique to their bag.

Referring now to FIG. 8, an exemplary view of a screen that may be displayed by the passenger system 25, such as a smart phone, depicts a user interface 164 that may be presented by the mobile application 66 and used for capturing images of the bag 150. The user interface 164 may include an image 166 showing a desired orientation of the bag 150, an arrow 168 indicating the angle at which an image of the bag should be captured, and a text field 170 that provides instructions on how to capture the image. The user interface 164 may also provide a frame 172 for centering the bag 150. The mobile application 66 may be configured to crop captured images so that only parts of the image within the frame 172 are uploaded to the baggage tracking database 22. As images are captured and uploaded to the baggage tracking database 22, the user interface 164 may update the image 166, arrow 168, and text field 170 to instruct the user to capture images from additional angles until a predefined number and type of images have been uploaded.

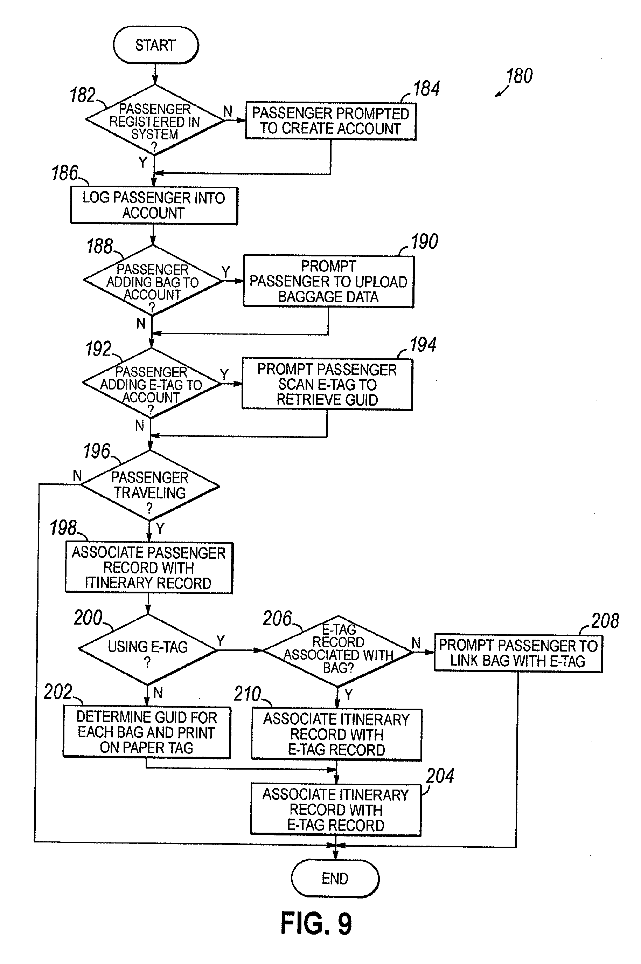

Referring now to FIG. 9, a flow-chart depicts a process 180 that may be executed by the baggage tracking system 20 for linking the passenger 64 and the bag 150 with a travel itinerary using the GUID. With reference to block 182, in response to the passenger 64 accessing the baggage tracking system 20, the process 180 may determine if the passenger 64 is registered in the system. The passenger 64 may be registered, for example, if they have used the baggage tracking system 20 previously, in which case the passenger may have a user record 109 stored in the baggage tracking database 22.

If the passenger 64 is not registered ("NO" branch of decision block 182), the process 180 may proceed to block 184 and prompt the passenger to create an account. In response to the passenger 64 creating the account, the process 180 may create and store the user record 109 in the baggage tracking database 22. The user record 109 and login process may enable the baggage tracking system 20 to uniquely identify the passenger in the baggage tracking database 22. If the passenger is registered ("YES" branch of decision block 182), the process 180 may proceed to block 186 and prompt the passenger 64 to log into their account. In response to the passenger 64 logging into their account, the process 180 may retrieve the user record 109 from the baggage tracking database 22. The user record 109 may be associated with one or more bag records 110 defining one or more bags that have been registered by the passenger. In an embodiment of the invention, the passenger 64 may be prompted to access the baggage tracking system 20 in response to the passenger 64 reserving or booking a travel itinerary online.

In block 188, the process 180 may determine if the passenger is adding a bag to their account. If the passenger is adding a bag ("YES" branch of decision block 188), the process 180 may proceed to block 190 and prompt the passenger to enter data defining one or more characteristics of the bag. For e-tags that are integrated with the bag by the manufacturer, data may be retrieved from the manufacturer system 24 and used to pre-fill the data fields in response to the passenger 64 scanning the e-tag 26. In either case, the data describing the bag may be stored in a bag record 110 comprising one or more data fields. Each data field may be configured to store a particular type of baggage data, and may correspond to a data entry field provided on the user interface 164. Exemplary data fields comprising the bag record 110 may include name, make, model, color, type, size, description, image, or any other suitable type of data that characterizes the bag.

For each bag being entered, the process 180 may prompt the passenger to enter data defining a name (e.g., "Mom's Suitcase"), make (which may be selected using manufacturer drop-down auto-list, e.g., SAMSONITE®), model (which may also be selected from a manufacturer drop-down auto-list), color (which may be chosen from color panel), type (e.g., suitcase, duffle, tote, garment bag, etc.), size (e.g., width, height, depth), description (e.g., natural language text describing the bag), image (one or more uploaded pictures, such as pictures of one or more sides of the bag as described with respect to FIGS. 7 and 8 above), or any other suitable data.

The entered data may be used to populate data fields comprising the bag record 110. Once the passenger has finished entering the data used to populate the bag record 110, the process 180 may prompt the user to either confirm or cancel creation of the bag record 110. In response to the passenger 64 confirming creation of the bag record 110, the bag record 110 may be stored in the baggage tracking database 22. When the passenger 64 is using the bag to travel, the passenger 64 may identify an e-tag 26 that they want to link with the bag to the check-in agent 76. The check-in agent 76 may access the baggage tracking system 20 using the customer management system 16 and cause the baggage tracking system 20 to associate the corresponding e-tag record 108 and the bag record 110. The e-tag record 108 may also be associated with the itinerary record 111 in the baggage tracking database 22 so that the customer management system 16 can determine which bags are linked to which trips based on the GUID.

In some cases, the passenger 64 may add an additional e-tag 26 to their account. This may occur, for example, if the passenger 64 has purchased a new bag that includes an integrated e-tag 26, or has purchased a separate e-tag 26 for attaching to a bag. To accommodate this scenario, in block 192, the process 180 may determine if the passenger 64 is adding an e-tag 26 to the account. If the passenger is adding an e-tag 26 ("YES" branch of decision block 192), the process 180 may proceed to block 194 and prompt the passenger to scan the e-tag 26. In response to the reading the e-tag 26, the passenger system 25 may retrieve the GUID from the e-tag 26 and transmit the GUID to the baggage tracking system 20. The baggage tracking system 20 may then create a new e-tag record 108 to store the GUID, and associate the new e-tag record 108 and the bag record 110 in the baggage tracking database 22.

Once the passenger has finished adding the e-tag 26, or if the passenger 64 is not adding an e-tag 26 ("NO" branch of decision block 192), the process 180 may proceed to block 196. In block 196, the process 180 may determine if the passenger has plans to travel, e.g., whether the passenger has booked a trip. If the passenger does not plan to travel ("NO" branch of decision block 196), the changes to the user record 109 may be finalized, and the process 180 terminated. If the passenger does plan to travel ("YES" branch of decision block 196), the process 180 may proceed to block 198.

In block 198, the process 180 may associate the user record 109 and the itinerary record 111 in the baggage tracking database 22. This association may comprise associating the record locator of a PNR that defines the itinerary in the PNR database 14 with the e-tag record 108 in the baggage tracking database 22. In an embodiment of the invention, before associating the user record 109 with the itinerary record 111, the baggage tracking system 20 may determine if the user record 109 is already associated with another itinerary record 111 that conflicts with the itinerary record 111 being added. If a conflict is detected, the baggage tracking system 20 may notify the passenger of the conflict, and require the conflict be resolved prior to associating the user record 109 with the new itinerary record 111. The process 180 may then proceed to block 200 and determine if the passenger is using an e-tag 26.

If the passenger 64 is not using an e-tag 26, e.g., has not attached a physical e-tag 26 to any of the bags ("NO" branch of decision block 200), the process 180 may proceed to block 202. In block 202, the process 180 may enable use of GUIDs without an e-tag 26 by determining the GUID being used with each bag and printing the GUID on a paper tag for attachment to the bag. The GUID may also be printed on a bag claim check that is retained by the passenger. The GUID may be printed as one or more of a machine readable code, such as a bar-code or QR-code, a string of alphanumeric characters, or using any other suitable method. Printing of the paper tags may be performed by the passenger system 25, or the tags may be stored as a digital file and printed out by the check-in agent 76 at the time the bags are checked. In either case, the process 180 may then proceed to block 204.

If the passenger 64 is using an e-tag 26 ("YES" branch of decision block 200), the process 180 may proceed to block 206. In block 206, the process 180 may, for each bag registered to the itinerary, determine if the corresponding bag record 110 is associated with an e-tag record 108 in the baggage tracking database 22. If the bag record 110 is not associated with an e-tag record 108 ("NO" branch of decision block 206), the process 180 may proceed to block 208 and prompt the passenger 64 to link the bag to the e-tag 26. This linking process may comprise, for example, reading the e-tag 26 to retrieve the GUID and transmitting the GUID to the baggage tracking system 20.

In response to receiving the GUID, the baggage tracking system 20 may create or identify an e-tag record 108 in the baggage tracking database 22 having the GUID, and associate this e-tag record 108 with the bag record 110. In an embodiment of the invention, one or more of the e-tag record 108, user record 109, and bag record 110 may be stored in the baggage tracking database 22 for a predetermined amount of time (e.g., 1 year) so that the passenger can use the baggage tracking system 20 for additional trips without having to re-load their data each time.

If the e-tag record 108 and the bag record 110 are associated ("YES" branch of decision block 206), the process 180 may proceed to block 210. In block 210, the process 180 may associate the e-tag record 108 and the itinerary record 111 in the baggage tracking database 22. In an embodiment of the invention, before associating the e-tag record 108 with the itinerary record 111, the baggage tracking system 20 may determine if the e-tag record 108 is already associated with another itinerary record 111 that conflicts with the itinerary record 111 being added. If a conflict is detected, the baggage tracking system 20 may deny the request to associate the records, and notify the passenger of the conflict, e.g., by displaying a message such as "Bag is linked to a conflicting itinerary." If no conflicts are detected, the process 180 may then proceed to block 204 and associate the bag record 110 with each of the user record 109 and the itinerary record 111. The user record 109, bag record 110, and itinerary record 111 may thereby be associated with the e-tag record 108 so that data relating to these aspects of the trip can be retrieved using the GUID.

In operation, if the passenger checks-in online, an online check-in application (not shown) may query the baggage tracking system 20 to search for e-tag records 108 associated with the user record 109 of the passenger. The online check-in application may then propose that the passenger use the GUIDs stored in the associated e-tag records 108. If no unused GUIDs are found, the check-in application may request that the passenger input the bag details and provide a GUID if they have one.

In response to finding an unused GUID, the check-in application may cause the passenger system 25 or a kiosk, as the case may be, to display a pop-up window listing the available GUIDs and images of one or more bags corresponding to bag records 110 associated with the user record 109 or itinerary record 111, e.g., that are linked to either the passenger 64 or the trip. The passenger 64 may then choose a GUID to link with a bag, and confirm that they want to link the selected bag to the selected GUID. The selected GUID may then be automatically added to one or more data fields in a baggage data window.

Once the e-tag record 108 and bag record 110 are associated in the baggage tracking database 22, the passenger 64 may be able to check baggage data using the GUID. For example, in response to the passenger 64 selecting a displayed GUID, the baggage tracking system 20 may cause the passenger system 25 to display a pop-up window that displays the stored information regarding the linked bag. The passenger 64 may then confirm that the displayed GUID is valid for the trip in question, as well as update the baggage data.

In an embodiment of the invention, if the baggage data fields have not been pre-filled with data from the manufacturer system 24, the fields may be in an "edit" mode during online check-in so that the passenger can add or update the baggage data. If the baggage data has been pre-filled by the manufacturer, the passenger may be limited to editing a "special details" field configured to receive data describing characteristics unique to the bag in question. Once the trip has started (e.g., the first flight of the travel itinerary has departed), the baggage data may be switched to a "read-only" mode so that the data cannot be altered by persons accessing the data through baggage tracking website 29 or mobile application 66.

At the airport baggage drop off, the check-in agent 76 may retrieve passenger, baggage, and itinerary data using the customer management system 16. For example, the customer management system 16 may display the number of bags registered for the trip, the GUIDs associated with the bags, and images of the bags on the customer management system 16. The check-in agent 76 may use the displayed data to verify that the bags present at the drop off location are the same bags as were registered online. The check-in agent 76 may weigh the bags, add weight data to the bag record 110, and tag the baggage with a paper tag or scan the e-tag 26 to associate the e-tag record 108 with the user record 109, bag record 110, and/or itinerary record 111 as described above. The passenger 64 and check-in agent 76 may then retrieve the baggage and itinerary data by entering or selecting the GUID, or by scanning the e-tag 26. For example, the GUID may be entered, selected, or read using the mobile application 66, and transmitted to the baggage tracking system 20. If any of the bags registered in the baggage tracking system 20 do not match bags appearing at the baggage drop off, the check-in agent 76 may cancel the bag registration in the baggage tracking system 20.

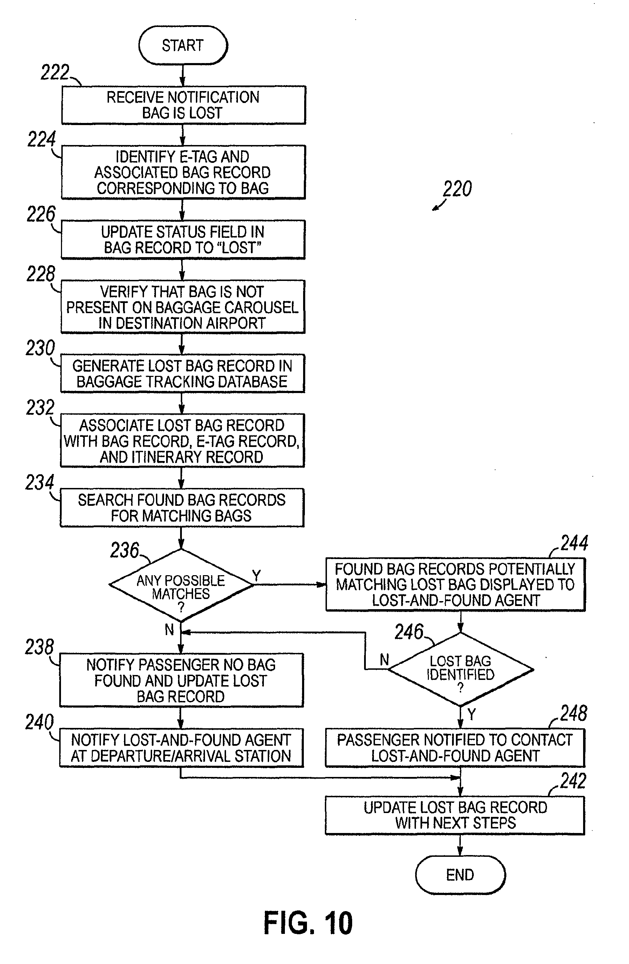

Referring now to FIG. 10, a flow-chart depicts a process 220 that may be executed by the baggage tracking system 20 in response to receiving data that indicates a bag has been lost. In block 222, process 220 may receive a notification declaring that the bag is lost. The notification may be sent to the baggage tracking system 20, for example, using the baggage tracking website 29 or mobile application 66. In an embodiment of the invention, the passenger 64 may report the bag as lost by logging into their account on the baggage tracking system 20 and selecting a registered bag to report. A lost baggage claim may then be sent to the lost-and-found agent 86 for processing.

In response to receiving the lost bag notification, the process 220 may proceed to block 224 and identify the e-tag record 108 and bag record 110 for the lost bag in the baggage tracking database 22. The process 220 may then proceed to block 226 and update a status field in the bag record 110 to indicate that the corresponding bag has been declared lost. The status field may store other relevant data, such as who declared the bag lost, whether the lost bag has been verified as lost, or any other data defining the status of the bag. This data can be added manually or automatically, e.g., by entering data through a user interface or pre-populating data fields with data retrieved from the database.

In block 228, the process 220 may prompt the passenger 64 or the lost-and-found agent 86 to go to the baggage carousel on which the bag was expected to arrive and verify that the bag is missing. To this end, the baggage tracking system 20 may send a message to the passenger 64 (e.g., a text message, e-mail, or notification that may be displayed by the mobile application 66) requesting the passenger 64 confirm that the bag did not arrive. The passenger 64 may then respond by confirming the bag is lost, or by notifying the baggage tracking system 20 that the bag has been found.

In response to the passenger 64 or lost-and-found agent 86 confirming that the bag is lost, the process 220 may proceed to block 230. In block 230, the process 220 may generate a lost-bag record 112 in the baggage tracking database 22. In cases where the lost-and-found agent 86 is the first to determine the bag is missing, the lost-and-found agent 86 may report the bag as lost by creating the lost-bag record 112. Creation of the lost-bag record 112 by the lost-and-found agent 86 may cause the baggage tracking system 20 to notify the passenger 64 that their bag is lost. The lost-bag record 112 may be populated with data from the e-tag record 108, the user record 109, the bag record 110, the itinerary record 111, and/or data that was entered by the passenger 64 and/or lost-and-found agent 86 as part of the process of declaring the bag lost. This data may include the GUID, flight information, characteristics of the bag (e.g., bag color, shape, model, and images), and data relating to the passenger 64 or travel itinerary.

In response to creation of the lost-bag record 112, the process 220 may proceed to block 232. In block 232, the process 220 may associate the lost-bag record 112 with the e-tag record 108, the bag record 110, and/or the itinerary record 111 in the baggage tracking database 22. Once the lost-bag record 112 has been associated with the other relevant records, the process 220 may proceed to block 234. In block 234, the process 220 may search found-bag records 113 for records that have a possibility of matching the lost-bag record 112. For example, the search may be limited to found-bag records 113 that were created after the lost bag was checked in.

The process 220 may first search for found-bag records 113 linked to a GUID that matches the GUID linked to the lost-bag record 112. Because the GUID is unique, a positive match during this search may cause the process 220 to conclude that the lost bag has been found. If the GUID-based search fails to identify a lost bag record, the process 220 may perform an image search. The image search may comprise comparing images associated with the lost-bag record 112 to images associated with the found-bag records 113. Found-bag records 113 having images sufficiently similar to those in the lost-bag record 112 may be flagged as a possible match.

In block 236, the process 220 may determine if any possible matches were found. If no possible matches were found ("NO" branch of decision block 236), the process 220 may proceed to block 238 and notify the passenger that the lost bag has not been located. The process 220 may also provide the carrier with an update indicating that the search did not find the lost bag. The process 220 may then proceed to block 240 and notify lost-and-found agents 86 at the departure station (e.g., originating airport) and the arrival station (e.g., destination airport) that the bag was not found by the initial search. The process 220 may also update the lost-bag record 112 to reflect that the GUID and image searches have been completed. Once the passenger, carrier, and lost-and-found agents 86 have been notified, the process 220 may proceed to block 242 and update the lost-bag record 112 with next steps.

If one or more possible matches are found ("YES" block of decision block 236), the process 220 may proceed to block 244. In block 244, the process 220 may cause a terminal to display data from the found-bag records 113 that are possible matches to the lost-and-found agent 86. If the process 220 does not receive an indication from the lost-and-found agent 86 that one of the possible matches is the lost bag ("NO" branch of decision block 246), the process 220 may proceed to block 238 and notify the passenger as described above. If the lost bag is positively identified by the lost-and-found agent 86 ("YES" branch of decision block 246), the process 220 may proceed to block 248 and notify the passenger 86 of the next steps for recovering their bag.

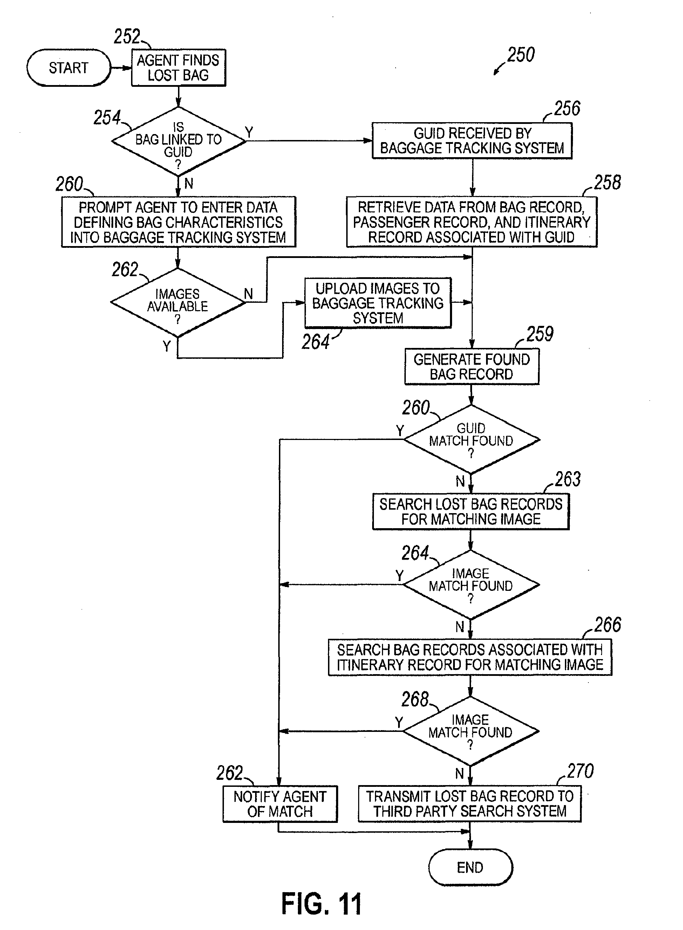

Referring now to FIG. 11, a flow-chart depicts a process 250 that may be executed by the baggage tracking system 20 in response to receiving data indicating that a lost bag has been found. In block 252, an agent, such as the loading agent 84, may find a lost bag. If the bag is linked to a GUID ("YES" branch of decision block 254), the process 250 may proceed to block 256. In block 256, the GUID may be received by the baggage tracking system 20. The GUID may be received by the baggage tracking system 20 in response to the agent scanning the e-tag 26, or the GUID may be otherwise entered into the system by the agent. In response to receiving the GUID, the process 250 may proceed to block 258. In block 258, the process 250 may identify the e-tag record 108 matching the GUID, and retrieve data from the user record 109, bag record 110, and/or itinerary record 111 associated with the identified e-tag record 108. The process 250 may then proceed to block 259.

If the bag is not linked to a GUID, or the GUID linked to the bag cannot be determined, ("NO" branch of decision block 254), the process 250 may proceed to block 260. In block 260, the process 250 may prompt the agent to enter data defining characteristics of the bag. This data may include, for example, the bag size, color, shape, type, make, model, weight, dimensions, markings, or any other suitable data. If images of the found bag are available, e.g., images can be taken by the agent that found the bag ("YES" branch of decision block 262), the process 250 may proceed to block 264 and prompt the agent to upload the images to the baggage tracking system 20. If images of the lost bag are not available ("NO" branch of decision block 262), the process 250 may proceed to block 259 without the agent uploading images of the lost bag.

In block 259, process 250 may generate a found-bag record 113 based on the data retrieved from the user record 109, bag record 110, itinerary record 111, or entered by the agent. If the GUID or images of the found bag are available, the found-bag record 113 may include the GUID or images.

In block 260, the process 250 may search for lost-bag records 112 associated with an e-tag record 108 having a GUID that matches the GUID in the found-bag record 113. In response to finding a lost-bag record 112 linked to a matching GUID ("YES" branch of decision block 260), the process 250 may proceed to block 262 and notify the lost-and-found agent 86 assigned to the matching lost-bag record 112 of the match. In response to the search failing to match the found-bag record 113 based on the GUID ("NO" branch of decision block 260), the process 250 may proceed to block 263.

In block 263, the process 250 may search the baggage tracking database 22 for lost-bag records 112 having images that match the images in the found-bag record 113. Before comparing images, the image search algorithm may refine the search by filtering lost-bag records 112 based on when data was added to the lost-bag records 112. For example, the search algorithm may require that the lost bag both traveled within a predetermined window of time (e.g. within the last 48 hours) and was checked in and/or reported as lost prior to the time the found bag was located. The search algorithm may also require that one or more of the color, shape, brand, and model of the bag in the lost-bag record 112 match the corresponding data in the found-bag record 113. Optionally, the search algorithm may also require that bag dimensions defined by the lost-bag record 112 be within a specified range of the bag dimensions in the found-bag record 113. For example, if the length of the bag defined by the found-bag record 113 is 60 inches, the process 250 may require that the dimensions defined in the lost-bag record 112 be between 50 and 70 inches.

Images contained in or linked to lost-bag records 112 satisfying the search algorithm filtering criteria may then be searched for matches with the images of the found bag. If multiple images are available (e.g., profile shots from each of the six viewpoints), the process 250 may compare each image with its corresponding view. The process 250 may return possible matches for display to the lost-and-found agent 86. If a large number of possible matches are found, the process 250 may limit the number of matches returned to a maximum amount, e.g., 20 possible matches. This limitation may be on a per-page or per-screen basis so that the user can page down if they wish to view additional matches. In an embodiment of the invention, if the number of possible matches based on the image search exceeds the maximum amount, the process 250 may notify the lost-and-found agent that the image match is not optimal or reliable, or has failed to identify a lost bag that matches the found bag.

In block 264, the process 250 may determine whether the found bag corresponding to the found-bag record 113 matches a lost bag corresponding to one of the lost-bag records 112 that was matched based on images. In response to a positive match between the found bag and a lost bag ("YES" branch of decision block 264), the process 250 may proceed to block 262 and notify the lost-and-found agent 86 of the match. In response to the process 250 failing to find a positive image match ("NO" branch of decision block 264), the process 250 may proceed to block 266.

In block 266, the process 250 may expand the image search to include other bag records 110 that share flights with those listed in the itinerary record 111 associated with the found-bag record 113. This expanded search may identify a matching bag from one of the flights on which the found bag traveled or should have traveled. The expanded search may be appropriate, for example, in the event that the found bag has not yet been reported as lost, in which case there may not be a matching lost-bag record 112 in the baggage tracking database 22.

In response to a positive match between the found bag and bag record 110 sharing a flight with the itinerary record 111 ("YES" branch of decision block 268), the process 250 may proceed to block 262 and notify the lost-and-found agent 86 of the match. If the process 250 fails to find a positive match ("NO" branch of decision block 268), the process 250 may proceed to block 270 and transmit the lost-bag record 112 to a third party search system. Exemplary third party search systems may include WORLDTRACER®, which is a service available from SITA of Geneva, Switzerland.

The process 250 may thereby enable positive matching using either GUID or image based searches. If the GUID is not available, then an automatic match can be made based solely on images of the bag. In response to multiple bags being identified as possible matches based on images, the process 250 may enable the lost-and-found agent 86 or other suitable party to review the images or other baggage data to determine if the lost bag has been found.

By associating user records 109, bag records 110, and itinerary records 111 with corresponding e-tag records 108 in the baggage tracking database 22, the baggage tracking system 20 may enable automatic population of lost bag forms. Advantageously, this feature may reduce the need for the passenger 64 to fill out lost bag forms. By linking the passenger, baggage, and trip, the GUID may enable the carrier to be informed of baggage mishandling prior to the passenger declaring the bag lost. This feature may allow the lost-and-found agent 86 to begin searching for a lost bag before the passenger 64 is aware that the bag is missing.

Upon determining that the bag has not been delivered to the destination station, the passenger 64 may provide the GUID linked to the lost bag to the lost-and-found agent 86. The GUID may be printed or otherwise encoded on a paper or electronic bag claim ticket, or may be determined by logging into the baggage tracking system 20. In any case, the lost-and-found agent 86 may search the baggage tracking system 20 for found bags matching the lost bag using the GUID, and may generate a lost bag claim form pre-populated with data based on data retrieved from the user record 109, bag record 110, and/or itinerary record 111 associated with the corresponding e-tag record 108. Because the lost bag claim form may be pre-populated with a significant amount of the required data, the passenger may only need to provide data unavailable in the baggage tracking system 20, such as an address for the bag delivery and a signature.

Once the bag has been declared lost, the baggage tracking system 20 may enable the passenger 64 to follow progress of the baggage search by logging into their user account in the baggage tracking system 20. The passenger 64 may also be automatically notified in response to a found bag being matched to the lost-bag record 112. In the case of matches based on images, the baggage tracking system 20 may prompt the lost-and-found agent 86 to validate the match by comparing the images of the lost bag and the potentially matching bag before sending out notifications to the passenger 64. The baggage tracking system 20 may thereby simplify and increase efficiency of the search process as compared to systems lacking the GUID or image matching features.

If the GUID is known, the baggage tracking system 20 may look for a positive match against one of the GUIDs in the baggage tracking database 22. If a positive match is identified, the baggage tracking system 20 may return the relevant baggage data to the lost-and-found agent 86 so that the agent can confirm that the bag identified by the GUID matches the bag declared lost. The confirmation may be performed by comparing passenger-provided images or other descriptive data provided by the passenger 64.

In cases where the GUID is not available, the set of bag records 110 against which the images of the found bag are compared may be reduced by filtering the bag records 110. This filtering may be based on predetermined criteria to reduce the number of images that must be compared. By reducing the number of images to be compared, the filtering may increase the speed at which image searches can be performed, and reduce the processing load on the baggage tracking system 20. In cases where matching by GUID and images fails, data relating to the lost bag retrieved from the baggage tracking database 22 may be transmitted to a third party baggage tracking system, such as WORLDTRACER®.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow-charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow-charts, sequence diagrams, and/or block diagrams.

In certain alternative embodiments, the functions, acts, and/or operations specified in the flow-charts, sequence diagrams, and/or block diagrams may be re-ordered, processed serially, and/or processed concurrently consistent with embodiments of the invention. Moreover, any of the flow-charts, sequence diagrams, and/or block diagrams may include more or fewer blocks than those illustrated consistent with embodiments of the invention.

Various aspects and embodiments of the present invention are defined by the following numbered clauses:
Clause 1: A system for tracking baggage comprising:
   one or more processors; and
   a memory coupled to the one or more processors, the memory storing data comprising a first database and program code that, when executed by the one or more processors, causes the system to:
      receive a first request to link a first globally unique identifier and a first item of baggage;
      in response to receiving the first request, associate, in the first database, a first record that defines the first globally unique identifier and a second record that defines a characteristic of the first item of baggage;
      receive a second request to link the first globally unique identifier and a passenger; and
      in response to receiving the second request, associate, in the first database, the first record and a third record that defines a characteristic of the passenger.
Clause 2: The system of clause 1 wherein the program code further causes the system to:
   read a tag associated with the first item of baggage to retrieve the first globally unique identifier; and
   in response to retrieving the first globally unique identifier, transmit one of the first request or the second request to the first database.
Clause 3: The system of clause 1 or 2 wherein the program code further causes the system to:
   read a tag associated with the first item of baggage to retrieve the first globally unique identifier;
   in response to retrieving the first globally unique identifier, transmit a third request to the first database and a second database, the third request including the first globally unique identifier and a record locator identifying a fourth record in the second database, the fourth record defining a first itinerary including a flight on which the passenger is traveling;
   associate the first record and the record locator in the first database; and
   associate the fourth record and the first globally unique identifier in the second database.
Clause 4: The system of clause 3 wherein the program code further causes the system to:
   receive, from a user device, a fourth request for information, the fourth request including the first globally unique identifier;
   identify the fourth record in the second database based on the first globally unique identifier;
   retrieve first data relating to the first itinerary from the fourth record; and
   transmit the first data to the user device.
Clause 5: The system of clause 3 or 4 wherein the program code further causes the system to:
   receive a notification indicating the first item of baggage is lost, the notification including the first globally unique identifier;
   retrieve, based on the first globally unique identifier, first data relating to the first item of baggage from the second record;
   retrieve, based on the first globally unique identifier, second data relating to the first itinerary from the fourth record; and
   populate a lost baggage form using the first data and the second data.
Clause 6: The system of any one of clauses 3 to 5 wherein the program code further causes the system to:
   receive a first notification indicating the first item of baggage is lost;
   in response to receiving the first notification, generate a fifth record in the first database, the fifth record defining a status of the first item of baggage as lost; and
   associate the fifth record with the first record.
Clause 7: The system of clause 6 wherein the program code further causes the system to:
   read a second tag linked to a second item of baggage to retrieve a second globally unique identifier;
   in response to retrieving the second globally unique identifier, transmit a second notification including the second globally unique identifier to the first database;
   compare the first globally unique identifier in the fifth record with the second globally unique identifier; and
   in response to the first globally unique identifier matching the second globally unique identifier, update the status of the first item of baggage from lost to found.
Clause 8: The system of any one of clauses 1 to 7 wherein the program code further causes the system to:
   read a tag associated with the first item of baggage to retrieve the first globally unique identifier;
   in response to receiving the first globally unique identifier, transmit a notification including the first globally unique identifier and data defining a current location of the first item of baggage to the first database;
   compare the current location to an expected location of the bag; and
   in response to the current location not matching the expected location, generate a fourth record in the first database, the fourth record defining a status of the first item of baggage as found.
Clause 9: The system of any one of clauses 1 to 8 wherein the program code further causes the system to:
   read a tag associated with a second item of baggage to retrieve a second globally unique identifier;
   in response to retrieving the second globally unique identifier, transmit a third request including the second globally unique identifier to the first database;
   compare the second globally unique identifier with each of a plurality of lost-bag records in the first database, each lost-bag record being associated with one of a plurality of globally unique identifiers linked to a lost item of baggage; and
   in response to one of the globally unique identifiers associated with the lost-bag records matching the second globally unique identifier, determine the second item of baggage is the lost item of baggage linked to the matching globally unique identifier.
Clause 10: The system of clause 9 wherein the third request includes data defining a first image of the second item of baggage, each lost-bag record is associated with a second image of the lost item of baggage, and the program code further causes the system to:
   in response to none of the globally unique identifiers associated with the lost-bag records matching the second globally unique identifier, compare the first image with one or more of the second images; and
   in response to the first image matching one of the one or more second images, determine the second item of baggage is the lost item of baggage associated with the matching second image.
Clause 11: A method for tracking baggage, the method comprising:
   receiving, at a first database, a first request to link a first globally unique identifier and a first item of baggage;
   in response to receiving the first request, associating, by the first database, a first record that defines the first globally unique identifier and a second record that defines a characteristic of the first item of baggage;
   receiving, at the first database, a second request to link the first globally unique identifier and a passenger; and
   in response to receiving the second request, associating, by the first database, the first record and a third record that defines a characteristic of the passenger.
Clause 12: The method of clause 11 further comprising:
   reading a tag associated with the first item of baggage to retrieve the first globally unique identifier; and
   in response to retrieving the first globally unique identifier, transmitting one of the first request or the second request to the first database.
Clause 13: The method of clause 11 or 12 further comprising:
   reading a tag associated with the first item of baggage to retrieve the first globally unique identifier;
   in response to retrieving the first globally unique identifier, transmitting a third request to the first database and a second database, the third request including the first globally unique identifier and a record locator identifying a fourth record in the second database, the fourth record defining a first itinerary including a flight on which the passenger is traveling;
   associating, by the first database, the first record and the record locator; and
   associating, by the second database, the fourth record and the first globally unique identifier.
Clause 14: The method of clause 13 further comprising:
   receiving, from a user device, a fourth request for information, the fourth request including the first globally unique identifier;
   identifying the fourth record in the second database based on the first globally unique identifier;
   retrieving first data relating to the first itinerary from the fourth record; and
   transmitting the first data to the user device.
Clause 15: The method of clause 13 or 14 further comprising:
   in response to receiving the third request, determining if a second itinerary is associated with the first record;
   in response to the second itinerary being associated with the first record, determining if the first itinerary conflicts with the second itinerary;
   in response to the first itinerary not conflicting with the second itinerary, associating the first itinerary with the first globally unique identifier; and
   in response to the first itinerary conflicting with the second itinerary, transmitting a reply to a user device that indicates the first itinerary conflicts with the second itinerary.
Clause 16: The method of any one of clauses 13 to 15 further comprising:
   receiving a notification indicating the first item of baggage is lost, the notification including the first globally unique identifier;
   retrieving, based on the first globally unique identifier, first data relating to the first item of baggage from the second record;
   retrieving, based on the first globally unique identifier, second data relating to the first itinerary from the fourth record; and
   populating a lost baggage form using the first data and the second data.
Clause 17: The method of any one of clauses 13 to 16 further comprising:
   receiving a first notification indicating the first item of baggage is lost;
   in response to receiving the first notification, generating a fifth record in the first database, the fifth record defining a status of the first item of baggage as lost; and
   associating the fifth record with the first record.
Clause 18: The method of clause 17 further comprising:
   reading a second tag linked to a second item of baggage to retrieve a second globally unique identifier;
   in response to retrieving the second globally unique identifier, transmitting a second notification including the second globally unique identifier to the first database;
   comparing the first globally unique identifier in the fifth record with the second globally unique identifier; and
   in response to the first globally unique identifier matching the second globally unique identifier, updating the status of the first item of baggage from lost to found.
Clause 19: The method of any one of clauses 11 to 18 wherein the second record defines a status of the first item of baggage and further comprising:
   in response to receiving a third request for a status update including the first globally unique identifier, identifying the second record based on the first globally unique identifier; and
   transmitting the status of the first item of baggage to a user device.
Clause 20: The method of clause 19 wherein the status includes one or more of a time the first item of baggage was scanned, a location of the first item of baggage, or an indication that the first item of baggage is checked, loaded, or found.
Clause 21: The method of any one of clauses 11 to 20 wherein the second record defines a status of the first item of baggage and further comprising:
   reading, by a user device, a tag associated with the first item of baggage to retrieve the first globally unique identifier;
   in response to receiving the first globally unique identifier, transmitting, by the user device, a notification including the first globally unique identifier and data defining a current status of the first item of baggage to the first database; and
   in response to receiving the notification, updating the second record to reflect the current status of the first item of baggage.
Clause 22: The method of clause 21 wherein the current status of the first item of baggage includes a current location of the first item of baggage, and further comprising:
   comparing the current location to an expected location of the bag; and
   in response to the current location not matching the expected location, generating a fourth record in the first database, the fourth record defining a status of the first item of baggage as found.
Clause 23: The method of any one of clauses 11 to 22 further comprising:
   transmitting a third request including the first globally unique identifier and a first image of the first item of baggage to the first database; and
   in response to receiving the third request, associating, by the first database, the first image and the first record.
Clause 24: The method of any one of clauses 11 to 23 further comprising:
   reading a tag associated with a second item of baggage to retrieve a second globally unique identifier;
   in response to retrieving the second globally unique identifier, transmitting a third request including the second globally unique identifier to the first database;
   comparing the second globally unique identifier with each of a plurality of lost-bag records in the first database, each lost-bag record being associated with one of a plurality of globally unique identifiers linked to a lost item of baggage; and
   in response to one of the globally unique identifiers associated with the lost-bag records matching the second globally unique identifier, determining the second item of baggage is the lost item of baggage linked to the matching globally unique identifier.
Clause 25: The method of clause 24 wherein the third request includes data defining a first image of the second item of baggage, each lost-bag record is associated with a second image of the lost item of baggage, and further comprising:
   in response to none of the globally unique identifiers associated with the lost-bag records matching the second globally unique identifier, comparing the first image with one or more of the second images; and
   in response to the first image matching one of the one or more second images, determining the second item of baggage is the lost item of baggage associated with the matching second image.
Clause 26: The method of clause 25 wherein the third request includes data defining a characteristic of the second item of baggage, and further comprising:
   filtering the lost bag records to generate a set of lost bag records for bags that match the characteristic of the second item of baggage, wherein the one or more second images are selected from the set of lost bag records.
Clause 27: A computer program product for tracking baggage, the computer program product comprising:
   a non-transitory computer-readable storage medium; and
   program code stored on the non-transitory computer-readable storage medium that, when executed by one or more processors, causes the one or more processors to:
      receive a first request to link a globally unique identifier and an item of baggage;
      in response to receiving the first request, associate, in a database, a first record that defines the globally unique identifier and a second record that defines a characteristic of the item of baggage;
      receive a second request to link the globally unique identifier and a passenger; and
      in response to receiving the second request, associate, in the database, the first record and a third record that defines a characteristic of the passenger.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A system for tracking baggage comprising:
one or more processors; and
a memory coupled to the one or more processors, the memory storing data comprising a first database and program code that, when executed by the one or more processors, causes the system to:
receive a first request to link a first globally unique identifier and a first item of baggage;
in response to receiving the first request, associate, in the first database, a first record that defines the first globally unique identifier and a second record that defines a characteristic of the first item of baggage; the characteristic including one of color, size, and model of the item of baggage;
receive a second request to link the first globally unique identifier and a passenger; and
in response to receiving the second request, associate, in the first database, the first record and a third record that defines a characteristic of the passenger.

2. The system of claim 1 wherein the program code further causes the system to:
receive a notification indicating the first item of baggage is lost, the notification including the first globally unique identifier;
retrieve, based on the first globally unique identifier, first data relating to the first item of baggage from the second record;
retrieve, based on the first globally unique identifier, second data relating to the first itinerary from the fourth record; and
populate a lost baggage form using the first data and the second data.

3. The system of claim 1 or 2 wherein the program code further causes the system to:
receive a first notification indicating the first item of baggage is lost;
in response to receiving the first notification, generate a fifth record in the first database, the fifth record defining a status of the first item of baggage as lost; and
associate the fifth record with the first record.

4. The system of claim 3 wherein the program code further causes the system to:
read a second tag linked to a second item of baggage to retrieve a second globally unique identifier;
in response to retrieving the second globally unique identifier, transmit a second notification including the second globally unique identifier to the first database;
compare the first globally unique identifier in the fifth record with the second globally unique identifier; and
in response to the first globally unique identifier matching the second globally unique identifier, update the status of the first item of baggage from lost to found.

5. The system of any one of claims 1 to 4 wherein the program code further causes the system to:
read a tag associated with the first item of baggage to retrieve the first globally unique identifier;
in response to receiving the first globally unique identifier, transmit a notification including the first globally unique identifier and data defining a current location of the first item of baggage to the first database;
compare the current location to an expected location of the bag; and
in response to the current location not matching the expected location, generate a fourth record in the first database, the fourth record defining a status of the first item of baggage as found.

6. The system of any one of claims 1 to 5 wherein the program code further causes the system to:
read a tag associated with a second item of baggage to retrieve a second globally unique identifier;
in response to retrieving the second globally unique identifier, transmit a third request including the second globally unique identifier to the first database;
compare the second globally unique identifier with each of a plurality of lost-bag records in the first database, each lost-bag record being associated with one of a plurality of globally unique identifiers linked to a lost item of baggage; and
in response to one of the globally unique identifiers associated with the lost-bag records matching the second globally unique identifier, determine the second item of baggage is the lost item of baggage linked to the matching globally unique identifier.

7. The system of claim 6 wherein the third request includes data defining a first image of the second item of baggage, each lost-bag record is associated with a second image of the lost item of baggage, and the program code further causes the system to:
in response to none of the globally unique identifiers associated with the lost-bag records matching the second globally unique identifier, compare the first image with one or more of the second images; and
in response to the first image matching one of the one or more second images, determine the second item of baggage is the lost item of baggage associated with the matching second image.

8. The system of claim 7 wherein a set of second images of baggage against which the first image of the second item of baggage is compared is reduced by filtering the records with the second images using image capture criteria and/or baggage data to select stored second images for comparison to the first image of the second item of baggage.

9. The system of claim 8 wherein the image capture criteria are at least one of (i) the view direction, such as front view, rear view, side view, and bottom view of the item of baggage, (ii) the color of the item of baggage, (iii) the type of the baggage, such as the type suitcase, tote bag, and duffle bag.

10. A method for tracking baggage, the method comprising:
receiving, at a first database, a first request to link a first globally unique identifier and a first item of baggage;
in response to receiving the first request, associating, by the first database, a first record that defines the first globally unique identifier and a second record that defines a characteristic of the first item of baggage; the characteristic including one of color, size, and model of the first item of baggage;
receiving, at the first database, a second request to link the first globally unique identifier and a passenger; and
in response to receiving the second request, associating, by the first database, the first record and a third record that defines a characteristic of the passenger.

11. The method of claim 10 further comprising:
transmitting a third request including the first globally unique identifier and a first image of the first item of baggage to the first database; and
in response to receiving the third request, associating, by the first database, the first image and the first record.

12. The method of claim 10 or 11 further comprising:
reading a tag associated with a second item of baggage to retrieve a second globally unique identifier;
in response to retrieving the second globally unique identifier, transmitting a third request including the second globally unique identifier to the first database;
comparing the second globally unique identifier with each of a plurality of lost-bag records in the first database, each lost-bag record being associated with one of a plurality of globally unique identifiers linked to a lost item of baggage; and
in response to one of the globally unique identifiers associated with the lost-bag records matching the second globally unique identifier, determining the second item of baggage is the lost item of baggage linked to the matching globally unique identifier.

13. The method of claim 12 wherein the third request includes data defining a first image of the second item of baggage, each lost-bag record is associated with a second image of the lost item of baggage, and further comprising:
in response to none of the globally unique identifiers associated with the lost-bag records matching the second globally unique identifier, comparing the first image with one or more of the second images; and
in response to the first image matching one of the one or more second images, determining the second item of baggage is the lost item of baggage associated with the matching second image.

14. The method of claim 13 wherein the third request includes data defining a characteristic of the second item of baggage, and further comprising:
filtering the lost bag records to generate a set of lost bag records for bags that match the characteristic of the second item of baggage; the characteristic including one of color, size, and model of the item of baggage, wherein the one or more second images are selected from the set of lost bag records.

15. A computer program for tracking baggage, the computer program comprising:
program code that, when executed by one or more processors, causes the one or more processors to:
receive a first request to link a globally unique identifier and an item of baggage;
in response to receiving the first request, associate, in a database, a first record that defines the globally unique identifier and a second record that defines a characteristic of the item of baggage; the characteristic including one of color, size, and model of the item of baggage;
receive a second request to link the globally unique identifier and a passenger; and
in response to receiving the second request, associate, in the database, the first record and a third record that defines a characteristic of the passenger.
